# EUROPEAN PATENT SPECIFICATION

(11) **EP 4 403 382 B1**
(45) Date of publication and mention of the grant of the patent: **24.12.2025**
(21) Application number: 22866990.9
(22) Date of filing: 16.05.2022
(51) Int. Cl.: B60C 13/02, B60C 19/00, B60C 13/00

(54) **TIRE**
REIFEN
PNEU

(30) Priority: 13.09.2021 JP 2021148904
(43) Date of publication of application: 24.07.2024
(73) Proprietor: BRIDGESTONE CORPORATION, Chuo-ku Tokyo 104-8340 (JP)
(72) Inventor: SHIMURA, Takashi, Tokyo 104-8340 (JP); TAKAMURA, Keiichi, Tokyo 104-8340 (JP)
(74) Representative: Marks & Clerk LLP
(86) International application number: PCT/JP2022/020435
(87) International publication number: WO 2023/037659

(56) References cited:
- EP-A1- 2 749 435
- EP-B1- 3 677 453
- WO-A1-2009/142127
- WO-A1-2010/126144
- WO-A1-2010/126144
- WO-A1-2021/070876
- JP-A- 2010 168 001
- JP-A- 2010 168 001
- JP-A- 2011 105 171
- JP-A- 2011 105 171
- JP-A- 2012 254 658
- JP-A- 2012 254 658
- JP-A- 2013 001 136
- JP-A- 2020 055 450
- JP-A- 2020 055 450

## Description

### TECHNICAL FIELD

The present invention relates to a tire.

The present application claims priority to Japanese Patent Application No. 2021-148904 filed on September 13, 2021.

### BACKGROUND

A tire that has a communication device (such as an RF tag) embedded inside the tire is known (Patent Literature 1).

JP 2010 168001 A relates to a run flat tire, in which a turbulence stimulation fin projecting in a tire width direction and extending in a tire diameter direction is arranged in the tire side part. A plurality of concavo-convex surfaces rising and falling in the tire width direction and extending in the tire diameter direction are formed at a top of the turbulence stimulation fin.

JP 2011 105171 A relates to a pneumatic tire, in which the turbulence generation projection extended in the tire radial direction is provided on at least part of the tire side part from the tread ground-contact end to the bead part. The tire side part is formed of a rubber member, and includes a low rigid part using a first rubber member having prescribed rigidity (for example, side rubber), and a high rigid part using a second rubber member having the rigidity higher than the first rubber member (for example, a bead filler). The turbulence generation projection is provided only on the low rigid part.

WO 2009/142127 A1 relates to a pneumatic tire provided with radial projections extending on tire surfaces in the radial direction of the tire and having a shape projecting outward from the tire surfaces in the lateral direction of the tire. The radial projections are arranged in a radial pattern centered on the rotation axis of the tire. Each of the radial projections has a low projection portion and a high projection portion, and the height of the low projection portion is less than the height of the high projection portion.

JP 2012 254658 A relates to a tire side part of a tire including a first region where a plurality of turbulence generating projections projecting from an outer surface and extending in the tire radial direction are arranged adjacently to one another, and a second region where no turbulence generating projections are arranged, wherein projection parts projecting from the outer surface are formed in the second region, each projection part has a shape of a character or a mark for displaying information or a shape of a picture and a pattern displaying design, and the height of the projection part from the outer surface of the tire side part is 50-100% of the height of the turbulence generating projection from the outer surface of the tire side part.

WO 2021/070876 A1 relates to a pneumatic tire including: a tread portion; a tire side portion; and a bead portion, and has a ridge region in a predetermined region of the tire side portion. The ridge region is formed by arranging a plurality of ridges, wherein the plurality of ridges are parallel to each other and periodically rise from a base surface, the pitch length between adjacent ridges in a cross-sectional view along an orthogonal direction that is a direction orthogonal to an extending direction of the plurality of ridges is 0.52 mm to 1.50 mm inclusive, and the ratio of the ridge height to the width of one ridge along the orthogonal direction is 0.60-1.40 inclusive.

WO 2010/126144 A1 relates to a pneumatic tire, in which turbulent flow-creating ridges extending from the inner circumference side to the outer circumference side are formed at intervals in the tire circumference direction on the tire surface of a tire side part, wherein: said turbulent flow-creating ridges have edge parts, as viewed in the sectional shape cut in the radial direction; the front wall angle, which is made between the front wall faces of the turbulent flow creating ridges to be hit by an air flow and the tire surface, ranges from 70 degrees to 110 degrees; and, as a side-reinforcing rubber constituting said tire side part, a rubber composition prepared by blending 100 parts by mass of a rubber component containing 10 mass% or more of a modified conjugated diene polymer, which is obtained by conducting a modification reaction between a terminus of a conjugated diene polymer and an alkoxysilane compound having a primary amino group or a precursor capable of forming a primary amino group through hydrolysis to thereby introduce the primary amino group or the precursor capable of forming a primary amino group through hydrolysis to said terminus, and further adding a fusion accelerator to the modification reaction system in the course of the modification reaction or after the completion thereof, with 10 to 100 parts by mass of carbon black having a nitrogen adsorption specific surface area of 20 to 90 m2/g.

EP 3 677 453 B1 relates to a tire in which the performance of an electronic component can be maintained, by arranging the electronic component at a position distanced from components made of metal. A tire includes: a carcass ply which extends from one bead to another bead; side-wall rubber which is disposed at an outer side in a tire-width direction of the carcass ply; tread rubber which is disposed at an outer side in a tire-radial direction of the carcass ply, in which the side-wall rubber and the tread rubber are laminated at a tire outer surface side of a region of at least part of the carcass ply, and in which an RFID tag serving as the electronic component is disposed between the side-wall rubber and the tread rubber.

JP 2020 055450 A relates to a tire including: a tread having an annular steel belt extending in a circumferential direction of the tire; a pair of beads having a bead filler extending on an outer side in a tire radial direction of a bead core; and an RFID tag embedded in a region between an outer end in the tire radial direction of the bead filler and an outer end in a tire width direction of the steel belt.

EP 2 749 435 A1 relates to a pneumatic tire comprising at least one sidewall portion provided with a serration pattern on its outer surface, the serration pattern comprising a plurality of first groups being repeatedly arranged in the circumferential direction of the tire, each first group comprising a plurality of ridges which are arranged using gradually increasing pitches toward a first circumferential direction of the tire, wherein a region provided with the serration pattern on the outer surface of the sidewall portion has a radius of curvature in a range of not more than 70mm in a cross section including a tire axis under a standard condition such that the tire is mounted on a standard rim and inflated to a standard pressure, but no tire load is loaded.

### CITATION LIST

### Patent Literature

PTL 1: JP 2021-046057 A

### SUMMARY

### (Technical Problem)

However, the conventional tire described above has room for improvement in the durability of the communication device.

The present invention aims to provide a tire that can improve the durability of a communication device.

### (Solution to Problem)

A tire of the present invention includes:
a communication device embedded inside a tire side portion; and
a plurality of turbulence-generating projections projecting from a tire outer surface of the tire side portion, extending along a tire radial direction, and arranged at intervals in a tire circumferential direction, wherein
the communication device overlaps at least one of an inter-projection recess between adjacent turbulence-generating projections and the turbulence-generating projection in a projected plane of the tire side portion in a tire width direction, and
the communication device is entirely located within the inter-projection recess in the projected plane of the tire side portion in the tire width direction.

### (Advantageous Effect)

According to the present invention, a tire that can improve the durability of a communication device can be provided.

### BRIEF DESCRIPTION OF THE DRAWINGS

In the accompanying drawings:
FIG. 1 is a side view of a portion of the tire side portion of a tire according to a first embodiment of the present invention, as viewed from the outside in the tire width direction;
FIG. 2 is a cross-sectional view, in the tire width direction, illustrating a portion of the tire in FIG. 1 by a cross-section along the A-A line in FIG. 1;
FIG. 3 is a perspective view illustrating an example of a communication device that can be used in a tire according to any embodiment of the present invention;
FIG. 4 is an exploded perspective view of the communication device in FIG. 3 in disassembled form;
FIG. 5 is a diagram illustrating the effect of turbulence-generating projections;
FIG. 6 is a cross-sectional view in the tire width direction illustrating a portion of a tire according to a second embodiment of the present invention;
FIG. 7 is a side view of a tire according to a third embodiment of the present invention;
FIG. 8 is a perspective view illustrating a turbulence-generating projection according to the third embodiment of the present invention;
FIG. 9 is a front view of the turbulence-generating projection illustrated in FIG. 8, viewed from the tire circumferential direction;
FIG. 10 is a perspective view illustrating a portion of a tire according to a fourth embodiment of the present invention;
FIG. 11 is a cross-sectional view, in the tread width direction, of the tire according to the fourth embodiment of the present invention;
FIG. 12 is a graph illustrating the temperature dependence of a bead filler and a side rubber portion in the tire according to the fourth embodiment of the present invention;
FIG. 13 is a side view of a tire according to a fifth embodiment of the present invention;
FIG. 14 is a partially enlarged view of a turbulence-generating projection illustrated in FIG. 13;
FIG. 15 is a main cross-sectional view illustrating the B-B cross-section of FIG. 13;
FIG. 16 is a side view of a tire according to a sixth embodiment of the present invention;
FIG. 17 is a main cross-sectional view illustrating the C-C cross-section of FIG. 16;
FIG. 18 is a side view of a tire according to a seventh embodiment of the present invention;
FIG. 19 is a partially enlarged view of a turbulence-generating projection illustrated in FIG. 18;
FIG. 20A is a partially enlarged view of a turbulence-generating projection illustrated in FIG. 18, and FIG. 20B is a cross-sectional view orthogonal to the extending direction of the turbulence-generating projection illustrated in FIG. 20A; and
FIG. 21A is a partial cross-sectional view, along the tire width direction and the tire radial direction, of a tire according to a seventh embodiment of the present invention, and FIG. 21B is a partial cross-sectional view, along the tire width direction and the tire radial direction, of the tire according to the seventh embodiment of the present invention.

### DETAILED DESCRIPTION

A tire according to the present invention can be suitably used as any type of pneumatic tire, such as a passenger vehicle pneumatic tire and a truck/bus pneumatic tire.

Embodiments of a tire according to the present invention are described below with reference to the drawings.

Members and components that are common across drawings are labeled with the same reference signs. In some of the drawings, the tire width direction is indicated by the reference sign "TW", the tire radial direction by the reference sign "RD", and the tire circumferential direction by the reference sign "CD". In the present description, the side closer to the tire inner cavity is referred to as the "tire inner side", and the side farther from the tire inner cavity as the "tire outer side".

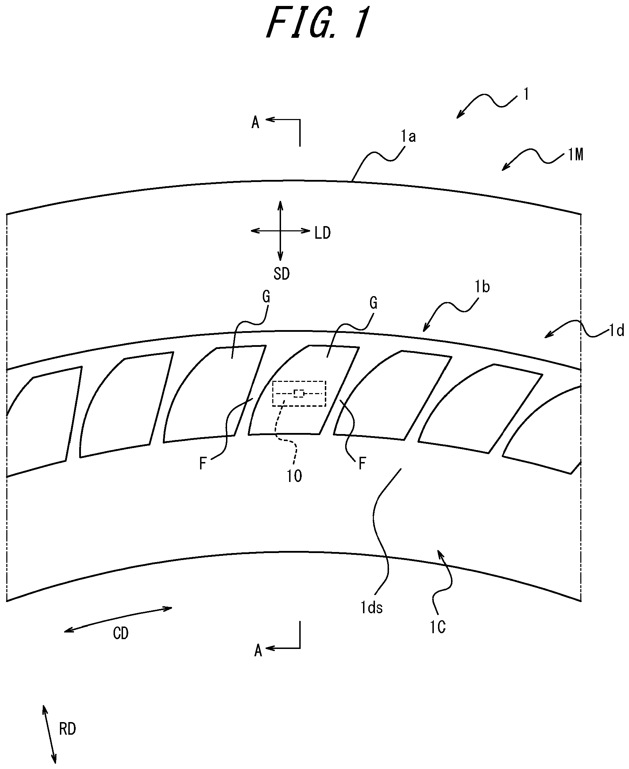

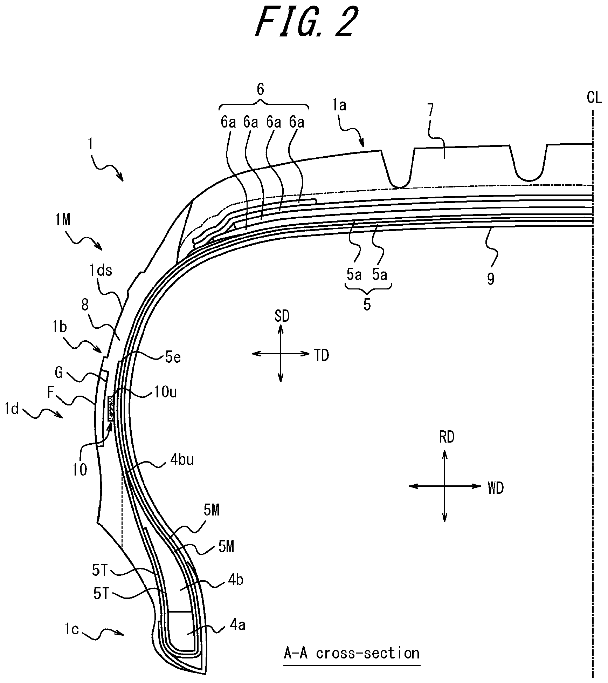

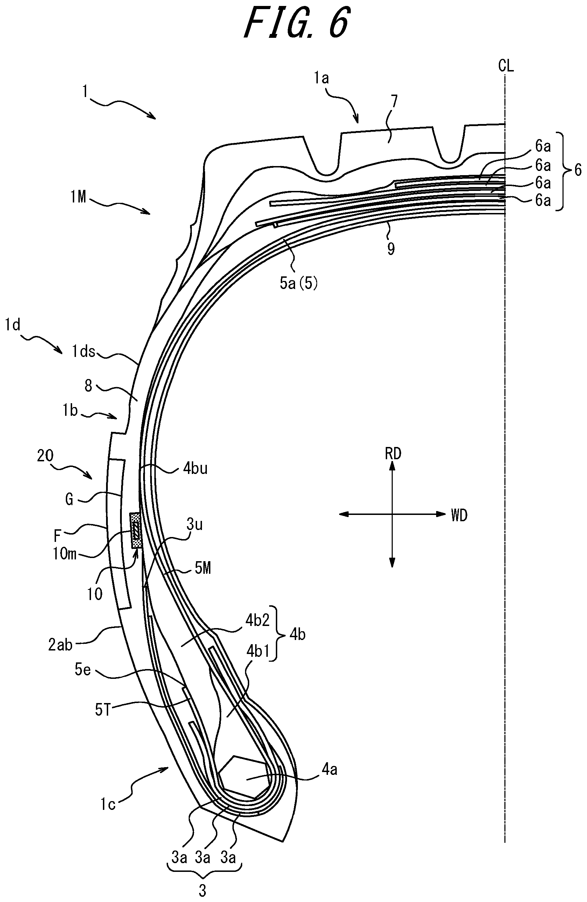

FIGS. 1 and 2 are diagrams illustrating a tire 1 according to a first embodiment of the present invention. FIG. 1 is a side view of a portion of the tire side portion of the tire according to the first embodiment of the present invention, as viewed from the outside in the tire width direction. FIG. 2 is a cross-sectional view, in the tire width direction, illustrating a portion of the tire in FIG. 1 (specifically, a portion on one side with respect to the tire equatorial plane CL) by a cross-section along the A-A line in FIG. 1. FIG. 6 is a cross-sectional view, in the tire width direction, illustrating a portion of a tire according to a second embodiment of the present invention (specifically, a portion on one side with respect to the tire equatorial plane CL).

The tire 1 of the embodiment in FIGS. 1 and 2 is configured as a passenger vehicle pneumatic tire. The tire 1 of the embodiment in FIG. 6 is configured as a truck/bus pneumatic tire. For the sake of convenience, these embodiments will be described together below.

The tire 1 of any embodiment of the present invention may be configured as any type of tire.

The tire 1 includes a tire main body 1M and a communication device 10. The tire main body 1M corresponds to the portion of the tire 1 other than the communication device 10.

Unless otherwise specified, the positional relationships, dimensions, and the like of elements are assumed below to be measured in a reference state in which the tire 1 is mounted on an applicable rim and filled to a prescribed internal pressure, with no load applied. The width in the tire width direction of the contact patch in contact with the road surface when the tire 1 is mounted on the applicable rim and filled to the prescribed internal pressure, with the maximum load applied, is referred to as the ground contact width of the tire, and the edges in the tire width direction of the contact patch are referred to as the ground contact edges.

In the present description, the "applicable rim" refers to a standard rim of an applicable size, such as the Measuring Rim in the STANDARDS MANUAL of the European Tyre and Rim Technological Organisation (ETRTO) in Europe or the Design Rim in the YEAR BOOK of the Tire and Rim Association, Inc. (TRA) in the USA, that is described, or will be described in the future, in industrial standards effective in the region where the pneumatic tire is manufactured and used, such as the JATMA YEAR BOOK published by the Japan Automobile Tyre Manufacturers Association (JATMA) in Japan, the STANDARDS MANUAL of the ETRTO, and the YEAR BOOK of the TRA. In the case of a size not specified in the aforementioned industrial standards, the "rim" refers to a rim whose width corresponds to the bead width of the pneumatic tire. The "applicable rim" includes sizes that will be described in the future in the aforementioned industrial standards, in addition to current sizes. Examples of the "sizes that could be described in the future" include the sizes described under "FUTURE DEVELOPMENTS" in the ETRTO STANDARDS MANUAL 2013.

In the present specification, the "prescribed internal pressure" refers to the air pressure (maximum air pressure) corresponding to the maximum load capability of a single wheel for the applicable size/ply rating in industrial standards, such as the aforementioned JATMA YEAR BOOK. In the case of a size not described in the aforementioned industrial standards, the "prescribed internal pressure" refers to the air pressure (maximum air pressure) corresponding to the maximum load capability prescribed for each vehicle on which the tire is mounted. In the present specification, the "maximum load" refers to the load corresponding to the maximum load capability for a tire of the applicable size described in the aforementioned industrial standards. In the case of a size not described in the aforementioned industrial standards, the "maximum load" refers to the load corresponding to the maximum load capability prescribed for each vehicle on which the tire is mounted.

First, the tire main body 1M will be described.

As illustrated in FIG. 2, FIG. 6, and the like, in each of the embodiments in the present description, the tire main body 1M includes a tread portion 1a, a pair of sidewall portions 1b extending inward in the tire radial direction from both tread widthwise ends of the tread portion 1a, and a pair of bead portions 1c provided at the respective tire radial inner ends of the sidewall portions 1b. The tread portion 1a is the tire widthwise portion between the pair of ground edges in the tire main body 1M. The bead portion 1c is configured to contact the rim on the inner side in the tire radial direction and the outer side in the tire width direction when the tire 1 is mounted on the rim.

The tire main body 1M has a pair of tire side portions 1d extending inward in the tire radial direction from both tire widthwise ends of the tread portion 1a. The tire side portion 1d is formed by the tire sidewall portion 1b and the bead portion 1c. The surface on the tire outer side of the tire side portion 1d is referred to in the present description as the "tire outer surface 1ds of the tire side portion 1d".

The tire main body 1M also includes a pair of bead cores 4a, a pair of bead fillers 4b, a carcass 5, a belt 6, a tread rubber 7, a side rubber 8, and an inner liner 9.

Each bead core 4a is embedded in the corresponding bead portion 1c. The bead core 4a includes a plurality of bead wires that are coated by rubber. The bead wires are preferably made of metal (such as steel). The bead wires can, for example, be made of monofilaments or twisted wires. The bead wires may also be made of organic fibers or carbon fibers.

Each bead filler 4b is positioned farther outward in the tire radial direction than the corresponding bead core 4a. The bead filler 4b tapers while extending outward in the tire radial direction. The bead filler 4b is, for example, made of rubber.

Bead fillers are sometimes referred to as "stiffeners".

As illustrated in FIG. 6, in a case in which the tire main body 1M (and thus the tire 1) is configured as a truck/bus pneumatic tire, the bead filler 4b may be formed by a plurality of (in the example in FIG. 6, two) bead filler portions 4b1 and 4b2. These bead filler portions 4b1, 4b2 may, for example, differ in hardness. These bead filler portions 4b1, 4b2 may, for example, be arranged (stacked) along the tire radial direction.

The carcass 5 spans the pair of bead cores 4a and extends toroidally. The carcass 5 is configured by one or more carcass plies 5a. Each carcass ply 5a includes one or more carcass cords and a coating rubber covering the carcass cords. The carcass cords can be formed from monofilaments or twisted wires.

The carcass cords may be made of organic fibers composed of polyester, nylon, rayon, aramid, or the like, or may be made of metal (such as steel). In a case in which the tire 1 is configured as a truck/bus pneumatic tire, the carcass cords are preferably made of metal (such as steel). In a case in which the tire 1 is configured as a passenger vehicle pneumatic tire, the carcass cords are preferably made of organic fibers, such as polyester, nylon, rayon, aramid, or the like.

The carcass ply 5a includes a ply main body 5M located between the pair of bead cores 4a. The carcass ply 5a may further include a ply turn-up portion 5T that is turned up, from both ends of the ply main body 5M, around the bead core 4a from the inside to the outside in the tire width direction. The carcass ply 5a need not include the ply turn-up portion 5T, however. The carcass 5 preferably has a radial structure but may also have a bias structure.

The belt 6 is disposed farther outward in the tire radial direction than a crown portion of the carcass 5. The belt 6 includes one or more belt layers 6a. Each belt layer 6a includes one or more belt cords and a coating rubber covering the belt cords. The belt cords can be formed from monofilaments or twisted wires. The belt cords may be made of metal (such as steel) or may be made of organic fibers composed of polyester, nylon, rayon, aramid, or the like.

The tread rubber 7 is located on the tire radial outer side of the belt 6 in the tread portion 1a. The tread rubber 7 forms the tread surface, which is the tire radial outer surface of the tread portion 1a. A tread pattern is formed on the tread surface.

The side rubber 8 is located on the tire widthwise outer side of the carcass 5 in the sidewall portion 1b. The side rubber 8 forms the tire widthwise outer surface of the sidewall portion 1b. The side rubber 8 is integrally formed with the tread rubber 7.

The inner liner 9 is disposed on the tire inner side of the carcass 5 and may, for example, be laminated onto the tire inner side of the carcass 5. The inner liner 9 is, for example, configured by a butyl-based rubber having low air permeability. Examples of butyl-based rubber include butyl rubber and butyl halide rubber, which is a derivative thereof. The inner liner 9 is not limited to butyl-based rubber and can be configured by other rubber compositions, resins, or elastomers.

As illustrated in FIG. 6, in a case in which the tire main body 1M (and thus the tire 1) is configured as a truck/bus pneumatic tire, the tire main body 1M may include a reinforcement member 3 around the bead core 4a. The reinforcement member 3 may be disposed on the opposite side of the bead core 4a from the carcass 5, as in the example in FIG. 6. The reinforcement member 3 includes one or more (in the example in FIG. 6, three) reinforcement plies 3a. Each reinforcement ply 3a contains a reinforcement cord. The reinforcement cord may be made of metal (such as steel) or may be made of organic fibers composed of polyester, nylon, rayon, aramid, or the like.

In each of the embodiments in the present description, as illustrated in FIGS. 1, 2, and 6, the tire main body 1M includes a plurality of turbulence-generating projections F projecting from the tire outer surface 1ds of the tire side portion 1d, extending along the tire radial direction, and arranged at intervals in the tire circumferential direction. An inter-projection recess G that is recessed inward in the tire width direction is defined between adjacent turbulence-generating projections F.

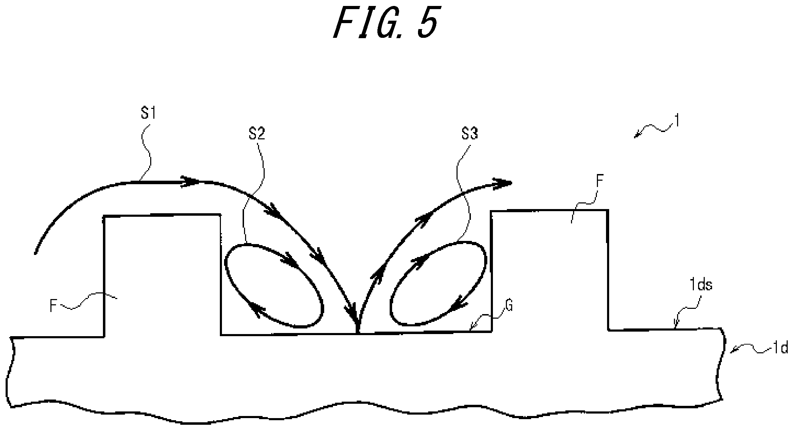

Here, with reference to FIG. 5, the effect of the turbulence-generating projections F will be described. As illustrated in FIG. 5, as the tire 1 rotates, the air flow S1 in contact with the tire outer surface 1ds of the tire side portion 1d where the turbulence-generating projection F is not formed is detached from the tire outer surface 1ds by the turbulence-generating projection F and overcomes the turbulence-generating projection F. On the back side of the turbulence-generating projection F, a portion (region) S2 is created in which the air flow is stagnant.

The air flow S1 then reattaches to the tire outer surface 1ds between the back side and the next turbulence-generating projection F and is detached again at the next turbulence-generating projection F. At this time, a portion (region) S3 is created in which the air flow is stagnant between the air flow S1 and the next turbulence-generating projection F and the like. Here, increasing the velocity gradient (speed) over the region in contact with the turbulence S1 is considered advantageous for increasing the cooling effect. In other words, provision of the turbulence-generating projection F on the tire outer surface 1ds of the tire side portion 1d generates the air flow S1 with a high flow rate and the stagnant portions S2, S3 and promotes the generation of turbulence on the tire outer surface 1ds of the tire side portion 1d, thereby enhancing the cooling effect of the tire side portion 1d.

Next, the communication device 10 will be described.

The configuration of the communication device 10 is not limited, provided that the communication device 10 is configured to communicate wirelessly with a predetermined external device (such as a reader or a reader/writer) located external to the tire 1.

The communication device 10 preferably includes an RF tag. RF tags are also referred to as "RFID tags". The RF tag is preferably configured as a passive type but may be configured as an active type.

Instead of or in addition to an RF tag, the communication device 10 may include an acceleration sensor that detects the acceleration of the tire 1, an internal pressure sensor that detects the internal pressure of the tire 1, or the like.

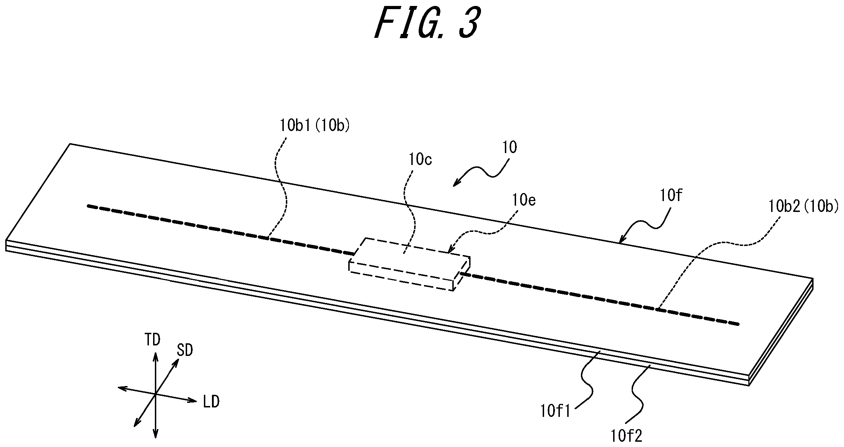

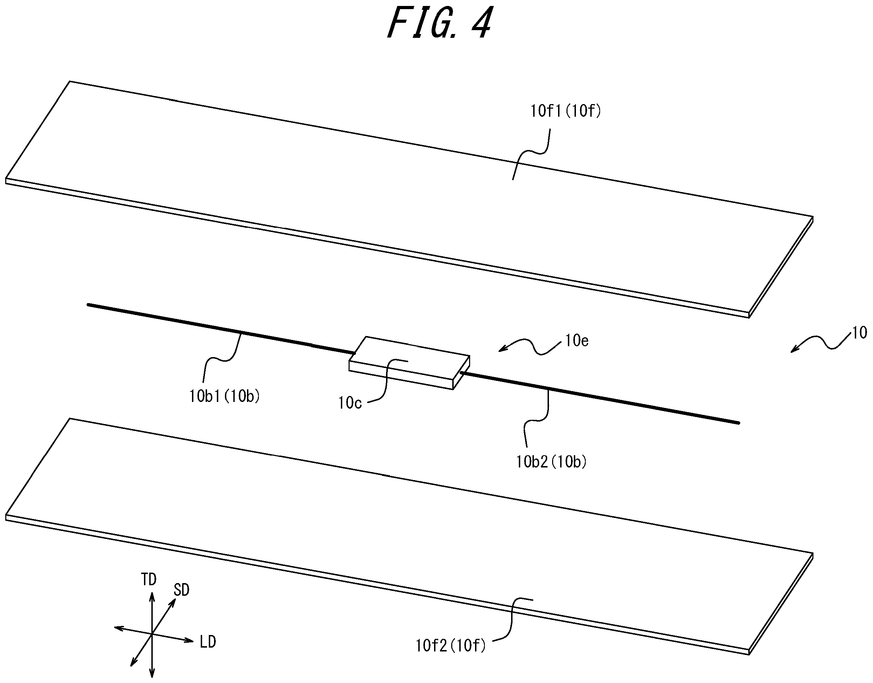

FIGS. 3 and 4 illustrate an example of the communication device 10. In the present example, the communication device 10 has an RF tag. In the present example, the communication device 10 includes an RF tag 10e and a cover 10f. The RF tag 10e includes an IC chip 10c and an antenna unit 10b. The RF tag 10e is configured as a passive type.

The IC chip 10c operates by an induced electromotive force generated by radio waves received by the antenna unit 10b, for example. The IC chip 10c has a controller and a memory, for example.

The memory may store any information. For example, the memory may store identification information for the tire 1. The identification information for the tire 1 is unique identification information for the tire 1 capable of identifying each tire individually, such as the manufacturer of the tire 1, the manufacturing plant, the date of manufacture, and the like. The memory may also store tire history information such as the running distance of the tire, the number of instances of sudden braking, the number of instances of sudden starts, and the number of instances of sudden turns. Sensors that detect the tire internal temperature, tire internal pressure, tire acceleration, and the like may be provided in the tire inner cavity, for example, and the memory may store detection information detected by these sensors. In this case, the RF tag 10e can acquire the detection information from the sensors by wirelessly communicating with the sensors through the antenna unit 10b.

The controller is configured to be capable of reading information from the memory.

The antenna unit 10b has a pair of antennas 10b1, 10b2. The antennas 10b1, 10b2 are connected to respective ends located on opposite sides of each other in the IC chip 10c. The antenna unit 10b is configured to be capable of transmission and reception to and from the aforementioned predetermined external device that is external to the tire 1. In the example in FIGS. 3 and 4, each antenna 10b1, 10b2 extends in a straight line, but each antenna 10b1, 10b2 may extend to form any shape, such as a wave shape.

The cover 10f covers the entire RF tag 10e. The cover 10f is formed from rubber or resin, for example.

In the present example, the cover 10f has a pair of sheet-like covering members 10f1 and 10f2. The pair of covering members 10f1, 10f2 overlap with the RF tag 10e sandwiched between them. The pair of covering members 10f1, 10f2 are preferably fixed to each other by adhesion or the like.

The cover 10f may, however, be configured by a single member.

In the present example, the cover 10f has a rectangular shape in plan view, but the cover 10f may have any shape in plan view.

The communication device 10 need not have the cover 10f, i.e., the communication device 10 may be configured only by the RF tag 10e.

The communication device 10 thus configured is capable of receiving, via the antenna unit 10b, information transmitted through a radio wave or magnetic field from the aforementioned predetermined external device. Due to rectification (in the case of radio waves) or resonance (in the case of magnetic fields), electricity is generated in the antenna unit 10b of the communication device 10, and the memory and controller of the IC chip 10c perform predetermined operations. For example, the controller reads the information in the memory and returns (transmits) the information to the aforementioned predetermined external device from the antenna 10b through a radio wave or magnetic field. The aforementioned predetermined external device receives the radio wave or magnetic field from the communication device 10. By retrieving the received information, the aforementioned predetermined external device can acquire the information stored in the memory of the IC chip 10c of the communication device 10.

The communication device 10 may, however, have any configuration other than that of the present example.

The communication device 10 may have a longitudinal direction LD, a transverse direction SD, and a thickness direction TD. The longitudinal direction LD, the transverse direction SD, and the thickness direction TD are perpendicular to each other.

As illustrated in FIGS 3 and 4, in a case in which the communication device 10 has the RF tag 10e, the longitudinal direction LD of the communication device 10 is parallel to the extending direction of the antenna unit 10b. In a case in which each of the antennas 10b1, 10b2 of the antenna unit 10b is wave-shaped, the extending direction of the antenna unit 10b refers to the extending direction of the amplitude centerline of the wave shape formed by each of the antennas 10b1, 10b2. In the communication device 10, the thickness direction TD of the communication device 10 refers to the thickness direction of the cover 10f in a case in which the communication device 10 has the cover 10f and refers to the thickness direction of the IC chip 10c in a case in which the communication device 10 does not have the cover 10f.

The length of the RF tag 10e in the longitudinal direction LD is, for example, preferably 20 mm or more, or 50 mm or more. The length of the RF tag 10e in the longitudinal direction LD is, for example, preferably 100 mm or less, or 70 mm or less.

The length of the RF tag 10e in the transverse direction SD is, for example, preferably 10 mm or less, or 8 mm or less.

The length of the RF tag 10e in the thickness direction TD is, for example, preferably 5 mm or less, or 2 mm or less.

In a case in which the communication device 10 has the cover 10f, the length of the communication device 10 in the longitudinal direction LD is, for example, preferably 30 mm or more, or 60 mm or more. The length of the RF tag 10e in the longitudinal direction LD is, for example, preferably 110 mm or less, or 80 mm or less.

In a case in which the communication device 10 has the cover 10f, the length of the communication device 10 in the transverse direction SD is, for example, preferably 20 mm or less, or 15 mm or less.

In a case in which the communication device 10 has the cover 10f, the thickness of the communication device 10 in the thickness direction TD is, for example, preferably 6 mm or less, or 3 mm or less.

The thickness of each of the covering members 10f1, 10f2 of the cover 10f is, for example, preferably 0.5 mm or more. The thickness of each of the covering members 10f1, 10f2 of the cover 10f is, for example, preferably 1 mm or less.

In each of the embodiments in the present description, the entire communication device 10 is embedded inside the tire side portion 1d of the tire main body 1M, as illustrated in FIGS. 1, 2, and 6. The communication device 10 is embedded in a portion of the tire side portion 1d of the tire body 1M that is farther outward in the tire width direction than the carcass 5.

The communication device 10 overlaps at least one of an inter-projection recess G between adjacent turbulence-generating projections F and a turbulence-generating projection F (in the example in FIG. 1, an inter-projection recess G) in a projected plane (FIG. 1) of the tire side portion 1d in the tire width direction. Here, the "projected plane of the tire side portion 1d in the tire width direction" is the projected plane when the tire side portion 1d is viewed as projected in the tire width direction, as illustrated in FIG. 1.

The communication device 10 is oriented so that the thickness direction TD of the communication device 10 is substantially aligned with the tire width direction (FIGS. 2 and 6).

During production of the tire 1, a raw tire forming the tire main body 1M and the communication device 10 are housed inside a mold for forming a tire and are vulcanized.

The effects of each embodiment in the present description are now explained.

First, as described above, in each of the embodiments in the present description, the communication device 10 is embedded inside the tire side portion 1d, as illustrated in FIGS. 1, 2, and 6. Here, in general, metal may weaken the radio waves between the communication device 10 and the aforementioned predetermined external device (such as a reader or a reader/writer), thereby degrading the communication performance between the communication device 10 and the aforementioned predetermined external device. This may in turn reduce the communication distance between the communication device 10 and the aforementioned predetermined external device. On the other hand, in the tire main body 1M, metal (such as steel) can be used in the carcass 5, the belt 6, the bead core 4a, the reinforcement member 3, and the like. In general, the tire side portion 1d tends to have less metal than the tread portion 1a. Therefore, arrangement of the communication device 10 in the tire side portion 1d can improve the communication performance and lengthen the communication distance between the communication device 10 and the aforementioned predetermined external device as compared to a case in which the communication device 10 is arranged in the tread portion 1a.

As described above, in each of the embodiments in the present description, the tire main body 1M includes a plurality of turbulence-generating projections F, the communication device 10 is embedded inside the tire side portion 1d of the tire main body 1M, and the communication device 10 overlaps at least one of an inter-projection recess G between adjacent turbulence-generating projections F and a turbulence-generating projection F in a projected plane (FIG. 1) of the tire side portion 1d in the tire width direction, as illustrated in FIGS. 1, 2, and 6. As a result, heat generated from the communication device 10 can be effectively dissipated by the turbulence-generating projections F, thereby suppressing thermal aging of the communication device 10, which in turn improves the durability of the communication device 10. In addition, since the turbulence-generating projections F disperse the strain of the tire side portion 1d during rolling and the like of the tire 1, the load on the communication device 10 can be reduced, thereby improving the durability of the communication device 10.

In each of the embodiments in the present description, the communication device 10 is entirely located within the inter-projection recess G in the projected plane (FIG. 1) of the tire side portion 1d in the tire width direction, as in the example in FIG. 1. This allows the impact (and thus the damage) from an obstacle to be received by the turbulence-generating projections F when the tire side portion 1d collides with an external obstacle and thus more reliably protects the communication device 10, which is located at the position corresponding to the inter-projection recess G, from damage. In this case, the gauge of the side rubber 8 covering the tire widthwise outer side of the communication device 10 is thin, yielding a corresponding improvement in the communication performance. In other words, carbon is included in the side rubber 8, and in general, carbon may weaken the radio waves between the communication device 10 and the aforementioned predetermined external device (such as a reader or a reader/writer), thereby degrading the communication performance between the communication device 10 and the aforementioned predetermined external device. This may in turn reduce the communication distance between the communication device 10 and the aforementioned predetermined external device. A thin gauge for the side rubber 8 covering the communication device 10 therefore leads to improved communication performance.

In each of the embodiments in the present description, the facing direction (orientation) of the communication device 10 is arbitrary, but from the perspective of durability and the like of the communication device 10, the communication device 10 is preferably oriented so that the longitudinal direction LD of the communication device 10 is substantially aligned with the tire circumferential direction, as in the example in FIG. 1. However, the communication device 10 may also be oriented so that the transverse direction SD of the communication device 10 is substantially aligned with the tire circumferential direction.

In each of the embodiments in the present description, the communication device 10 is preferably arranged in the sidewall portion 1b, as in each of the embodiments in FIGS. 2 and 6. In general, the sidewall portion 1b tends to have less metal than the bead portion 1c. Therefore, arrangement of the communication device 10 in the sidewall portion 1b can improve the communication performance and lengthen the communication distance between the communication device 10 and the aforementioned predetermined external device as compared to a case in which the communication device 10 is arranged in the bead portion 1c.

In each of the embodiments in the present description, in a case in which the tire 1 is configured as a passenger vehicle pneumatic tire (FIG. 2), the tire radial outer end 10u of the communication device 10 (more preferably, the entire communication device 10) is preferably farther outward in the tire radial direction than the tire radial outer end of the bead core 4a, more preferably farther outward in the tire radial direction than the tire radial center of the bead filler 4b. For example, the tire radial outer end 10u is preferably farther outward in the tire radial direction than a tire radial outer end 4bu of the bead filler 4b.

In each of the embodiments in the present description, in a case in which the tire 1 is configured as a passenger vehicle pneumatic tire (FIG. 2), and the communication device 10 is arranged in the sidewall portion 1b as described above, the tire radial outer end 10u of the communication device 10 is preferably located farther inward in the tire radial direction than the tire radial outer end 5e of the ply turn-up portion 5T of the carcass 5, as in the example in FIG. 2. This can improve the communication performance and increase the communication distance between the communication device 10 and the aforementioned predetermined external device, while enabling arrangement of the communication device 10 in a portion of the tire main body 1M that undergoes relatively little distortion during rolling and the like of the tire 1, thereby improving the durability of the communication device 10 and hence the durability of the tire 1.

The tire radial distance between the tire radial outer end 10u of the communication device 10 and the tire radial outer end 5e of the ply turn-up portion 5T of the carcass 5 is preferably 3 mm to 30 mm, more preferably 5 mm to 15 mm.

In each of the embodiments in the present description, in a case in which the tire 1 is configured as a passenger vehicle pneumatic tire (FIG. 2), the tire radial outer end 5e of the ply turn-up portion 5T of the carcass 5 is preferably located farther outward in the tire radial direction than the tire radial outer end 4bu of the bead filler 4b, as in the example in FIG. 2. The tire radial outer end 5e of the ply turn-up portion 5T of the carcass 5 may, however, be located at the same tire radial position as the tire radial outer end of the bead filler 4b, or farther inward in the tire radial direction.

In each of the embodiments in the present description, in a case in which the tire 1 is configured as a passenger vehicle pneumatic tire (FIG. 2), the tire radial outer end 5e of the ply turn-up portion 5T of the carcass 5 may be located farther outward in the tire radial direction than the tire maximum width position of the tire main body 1M, at the same tire radial position as the tire maximum width position of the tire main body 1M, or farther inward in the tire radial direction than the tire maximum width position of the tire main body 1M. Here, the "tire maximum width position of the tire main body 1M" is the position in the tire radial direction at which the tire main body 1M has the maximum dimension in the tire width direction.

In each of the embodiments in the present description, in a case in which the tire 1 is configured as a passenger vehicle pneumatic tire (FIG. 2), the communication device 10 is preferably in contact with the tire widthwise outer surface of the carcass 5 and is more preferably in contact with the tire widthwise outer surface of the ply turn-up portion 5T of the carcass 5, as in the example in FIG. 2.

In each of the embodiments in the present description, in a case in which the tire 1 is configured as a truck/bus pneumatic tire (FIG. 6), the tire radial center 10m of the communication device 10 (more preferably, the entire communication device 10) is preferably farther outward in the tire radial direction than the tire radial outer end of the bead core 4a. This can improve the communication performance and lengthen the communication distance between the communication device 10 and the aforementioned predetermined external device.

In each of the embodiments in the present description, in a case in which the tire 1 is configured as a truck/bus pneumatic tire (FIG. 6), the tire radial center 10m of the communication device 10 (more preferably, the entire communication device 10) is preferably farther outward in the tire radial direction than the tire radial outer end 5e of the ply turn-up portion 5T of the carcass 5. This can improve the communication performance and increase the communication distance between the communication device 10 and the aforementioned predetermined external device, while enabling arrangement of the communication device 10 in a portion of the tire main body 1M that undergoes relatively little distortion during rolling and the like of the tire 1, thereby improving the durability of the communication device 10 and hence the durability of the tire 1.

Here, the "tire radial outer end 5e of the ply turn-up portion 5T of the carcass 5" refers to the tire radial outer end that is farthest outward in the tire radial direction among the tire radial outer ends of the ply turn-up portions 5T of the carcass plies 5a of the carcass 5.

In each of the embodiments in the present description, in a case in which the tire 1 is configured as a truck/bus pneumatic tire (FIG. 6), the tire radial center 10m of the communication device 10 (more preferably, the entire communication device 10) is preferably farther outward in the tire radial direction than a tire radial outer end 3u of the reinforcement member 3. This can improve the communication performance and increase the communication distance between the communication device 10 and the aforementioned predetermined external device, while enabling arrangement of the communication device 10 in a portion of the tire main body 1M that undergoes relatively little distortion during rolling and the like of the tire 1, thereby improving the durability of the communication device 10 and hence the durability of the tire 1.

Here, the "tire radial outer end 3u of the reinforcement member 3" refers to the tire radial outer end that is farthest outward in the tire radial direction among the tire radial outer ends of the reinforcement plies 3a of the reinforcement member 3.

In each of the embodiments in the present description, in a case in which the tire 1 is configured as a truck/bus pneumatic tire (FIG. 6), the tire radial center 10m of the communication device 10 (more preferably, the entire communication device 10) is preferably farther inward in the tire radial direction than the tire radial outer end 4bu of the bead filler 4b. This can improve the communication performance and increase the communication distance between the communication device 10 and the aforementioned predetermined external device, while enabling arrangement of the communication device 10 in a portion of the tire main body 1M that undergoes relatively little distortion during rolling and the like of the tire 1, thereby improving the durability of the communication device 10 and hence the durability of the tire 1.

The tire radial distance between the tire radial center 10m of the communication device 10 and the tire radial outer end 4bu of the bead filler 4b is preferably 1 mm to 30 mm, more preferably 5 mm to 15 mm.

In each of the embodiments in the present description, in a case in which the tire 1 is configured as a truck/bus pneumatic tire (FIG. 6), the tire radial outer end 5e of the ply turn-up portion 5T of the carcass 5 is preferably located farther inward in the tire radial direction than the tire radial outer end 4bu of the bead filler 4b, but the tire radial outer end 5e of the ply turn-up portion 5T of the carcass 5 may be located at the same tire radial position as the tire radial outer end 4bu of the bead filler 4b or farther outward in the tire radial direction.

In each of the embodiments in the present description, in a case in which the tire 1 is configured as a truck/bus pneumatic tire (FIG. 6), the tire radial outer end 3u of the reinforcement member 3 is preferably located farther inward in the tire radial direction than the tire radial outer end 4bu of the bead filler 4b, but the tire radial outer end 3u of the reinforcement member 3 may be located at the same tire radial position as the tire radial outer end 4bu of the bead filler 4b or farther outward in the tire radial direction.

In each of the embodiments in the present description, in a case in which the tire 1 is configured as a truck/bus pneumatic tire (FIG. 6), the tire radial outer end 5e of the ply turn-up portion 5T of the carcass 5 may be located farther inward in the tire radial direction than the tire maximum width position of the tire main body 1M, as in the example in FIG. 6, at the same tire radial position as the tire maximum width position of the tire main body 1M, or farther outward in the tire radial direction than the tire maximum width position of the tire main body 1M.

Here, the "tire maximum width position of the tire main body 1M" is the position in the tire radial direction at which the tire main body 1M has the maximum dimension in the tire width direction.

In each of the embodiments in the present description, in a case in which the tire 1 is configured as a truck/bus pneumatic tire (FIG. 6), the tire radial outer end 3u of the reinforcement member 3 may be located farther inward in the tire radial direction than the tire maximum width position of the tire main body 1M, as in the example in FIG. 6, at the same tire radial position as the tire maximum width position of the tire main body 1M, or farther outward in the tire radial direction than the tire maximum width position of the tire main body 1M.

In each of the embodiments in the present description, in a case in which the tire 1 is configured as a truck/bus pneumatic tire (FIG. 6), the tire radial center 10m of the communication device 10 (more preferably, the entire communication device 10) is preferably located farther inward in the tire radial direction than the tire maximum width position of the tire main body 1M. This can improve the communication performance and increase the communication distance between the communication device 10 and the aforementioned predetermined external device, while enabling arrangement of the communication device 10 in a portion of the tire main body 1M that undergoes relatively little distortion during rolling and the like of the tire 1, thereby improving the durability of the communication device 10 and hence the durability of the tire 1.

In each of the embodiments in the present description, in a case in which the tire 1 is configured as a truck/bus pneumatic tire (FIG. 6), the communication device 10 is preferably in contact with the tire widthwise outer surface of the bead filler 4b, as in the example in FIG. 6.

In each of the embodiments in the present description, the maximum width of the turbulence-generating projection F in the tire circumferential direction is preferably 4.7 mm to 7.1 mm.

This can further improve the durability of the communication device 10.

In each of the embodiments in the present description, the length of the turbulence-generating projection F in the tire radial direction is preferably 8 mm to 30 mm.

This can further improve the durability of the communication device 10.

In each of the embodiments in the present description, the maximum distance between adjacent turbulence-generating projections F in the tire circumferential direction (i.e., the maximum length of the inter-projection recess G in the tire circumferential direction) is preferably 10 mm to 25 mm.

This can further improve the durability of the communication device 10.

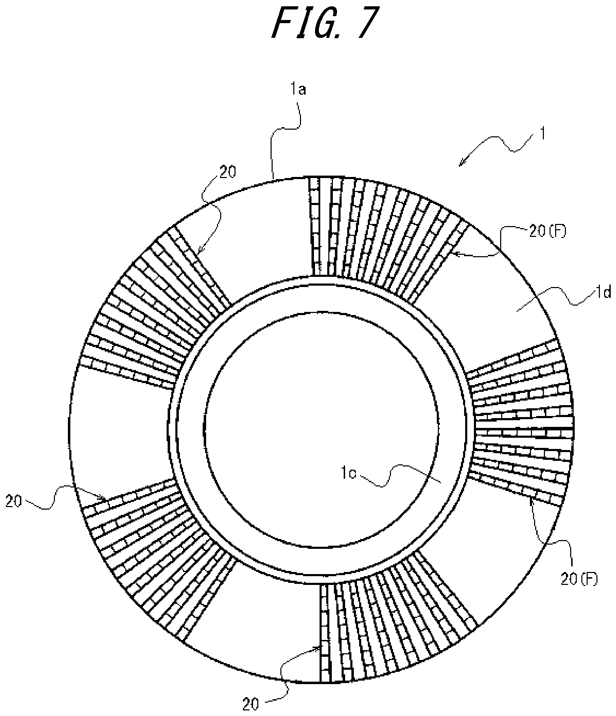

Variations of the turbulence-generating projection F are described below with reference to FIGS. 7 to 21.

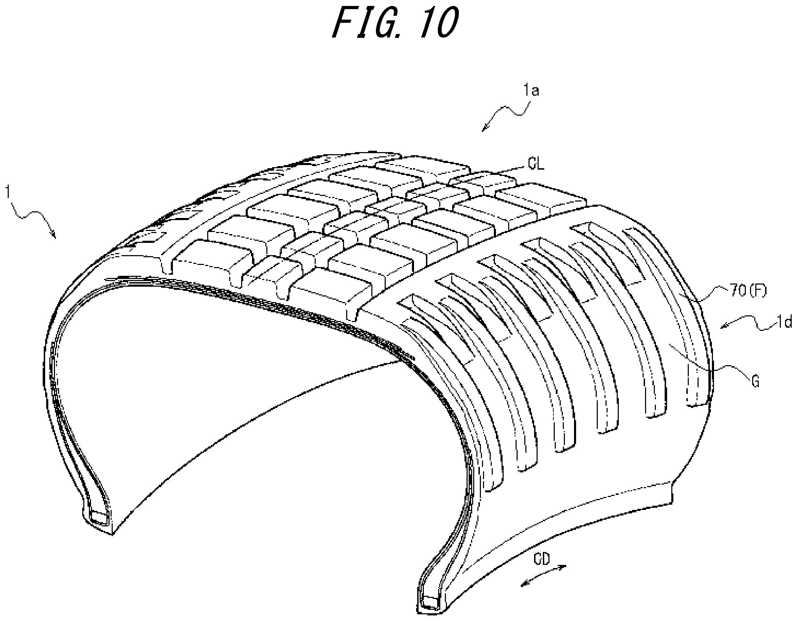

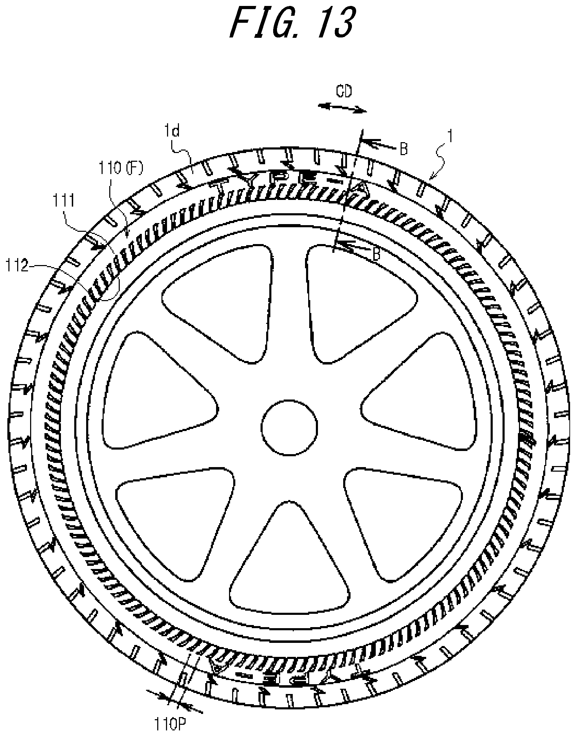

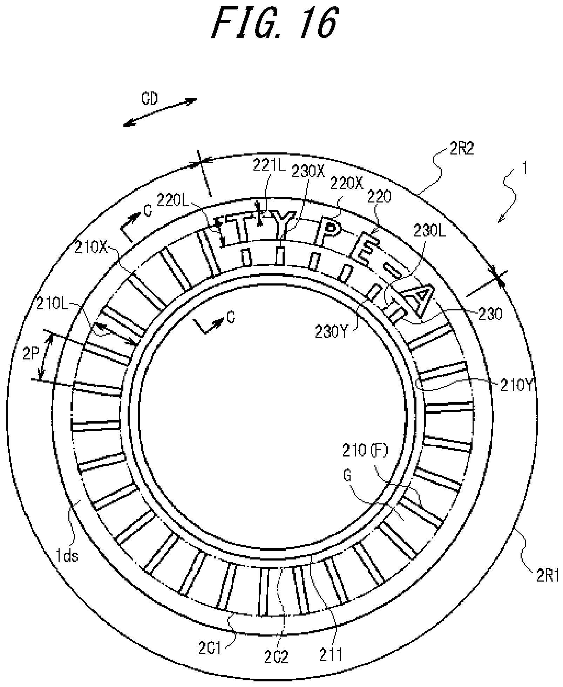

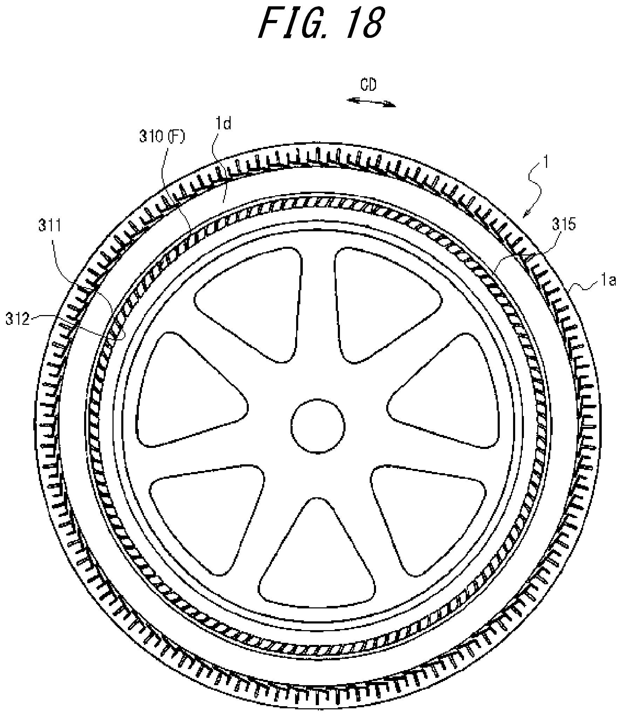

FIGS. 7 to 9 are diagrams illustrating a tire 1 according to a third embodiment of the present invention. FIGS. 10 to 12 are diagrams illustrating a tire 1 according to a fourth embodiment of the present invention. FIGS. 13 to 15 are diagrams illustrating a tire 1 according to a fifth embodiment of the present invention. FIGS. 16 to 17 are diagrams illustrating a tire 1 according to a sixth embodiment of the present invention. FIGS. 18 to 21 are diagrams illustrating a tire 1 according to a seventh embodiment of the present invention. The configuration of the turbulence-generating projection F differs in each of the embodiments in FIGS. 7 to 21. However, in each of the embodiments in FIGS. 7 to 21, as in the embodiments described above with reference to FIGS. 1 to 6, the tire main body 1M includes a plurality of turbulence-generating projections F projecting from the tire outer surface 1ds of the tire side portion 1d, extending along the tire radial direction, and arranged at intervals in the tire circumferential direction. An inter-projection recess G that is recessed inward in the tire width direction is defined between adjacent turbulence-generating projections F.

In FIGS. 7 through 21, the communication device 10 is not depicted for the sake of convenience. In each of the embodiments in FIGS. 7 to 21 as well, however, the tire 1 includes the communication device 10, which is embedded inside the tire side portion 1d of the tire main body 1M, and the communication device 10 overlaps at least one of an inter-projection recess G between adjacent turbulence-generating projections F and a turbulence-generating projection F in a projected plane of the tire side portion 1d in the tire width direction.

The tire 1 according to the third embodiment of the present invention is described below with reference to FIGS. 7 to 9.

In the tire 1 of the third embodiment, a plurality of uneven surfaces extending along the tire radial direction while undulating in the tire width direction is formed at the apex of the turbulence-generating projection F.

As illustrated in FIG. 7, the tire side portion 1d is provided with turbulence-generating projections 20(F). The turbulence-generating projection 20(F) extends in the tire radial direction and projects outward in the tire width direction. As also illustrated in FIG. 7, a plurality (eight in the present embodiment) of the turbulence-generating projections 20(F) is arranged close together along the circumferential direction to form one turbulence-generating projection group. Five of these turbulence-generating projection groups are provided at intervals along the circumferential direction.

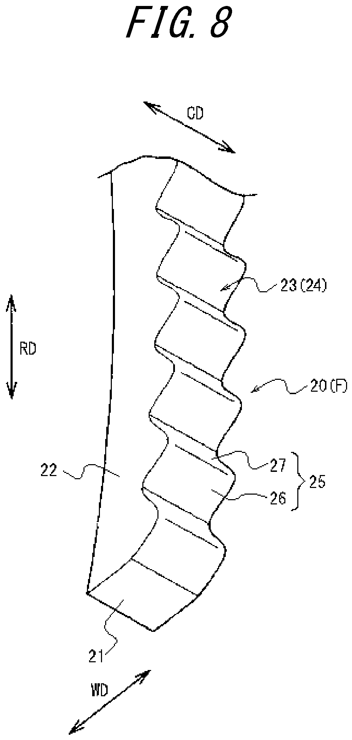

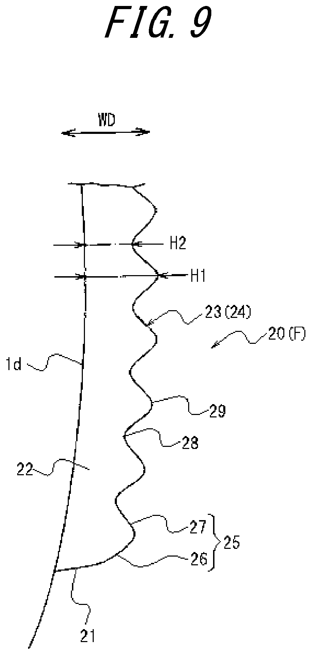

FIG. 8 is an enlarged perspective view illustrating the turbulence-generating projection according to the present embodiment, and FIG. 9 is a front view of FIG. 8 from the tire circumferential direction.

As illustrated in these drawings, the turbulence-generating projection 20 is defined by a bottom wall 21 provided at the inner end in the tire radial direction RD, a pair of side wall surfaces 22, 22 provided on both sides in the tire circumferential direction CD, and an apex 23 provided on the tire widthwise outer side.

The side wall surfaces 22 are flat while extending along the tire radial direction, and the pair of side wall surfaces 22, 22 are arranged at a predetermined distance from each other.

The apex 23 is formed into an uneven surface 24 that repeatedly undulates in the tire width direction. One uneven portion 25 forming part of this uneven surface 24 has, in greater detail, a substantially triangular cross-sectional shape formed by a first inclined surface (climbing surface) 26 inclined outward in the tire width direction while extending outward in the tire radial direction (to the top of the paper in FIGS. 8 and 9) and a second inclined surface (descending surface) 27 inclined inward in the tire width direction while extending outward in the tire radial direction (to the top of the paper in FIGS. 8 and 9). The apex 23 of the turbulence-generating projection 20 is formed into the uneven surface 24 by a plurality of these uneven portions 25 being successively formed in the tire radial direction on the apex 23.

As illustrated in FIG. 9, the boundary portion between the second inclined surface 27 and the first inclined surface 26 adjacent to the second inclined surface 27 becomes a valley point 28, and the cross-sectional shape of the valley point 28 is formed to be curved with a small radius of curvature. Similarly, at an apex 29 where the first inclined surface 26 transitions to the second inclined surface 27, the cross-sectional shape of the apex 29 is formed to be curved with a small radius of curvature.

The height of the uneven surface 24, i.e., the distance along the tire width direction between the apex 29 and the surface of the tire side portion 1d, is H1. On the other hand, the height of the valley point 28, i.e., the distance along the tire width direction between the valley point 28 and the surface of the tire side portion 1d, is H2. Here, the undulation height of the uneven surface 24 is (H1 - H2), and the height of the turbulence-generating projection 20 is H1. The undulation height of the uneven surface 24 (H1 - H2) is preferably 20% to 70% of the height H1 of the turbulence-generating projection 20.

In the third embodiment, a plurality of the uneven surfaces 24 extending along the tire radial direction while undulating in the tire width direction is formed at the apex of the turbulence-generating projection 20(F).

Therefore, compared to a turbulence-generating projection with a flat apex, the turbulence-generating projection 20(F) with an uneven surface 24 according to the present embodiment has a greater cooling effect on the tire side portion 1d, since the generated turbulence S1 (FIG. 5) is larger. In addition, in the case of a turbulence-generating projection with a flat apex, air accumulated at the apex of the projection in the mold for forming a tire can easily move without resistance when the tire is vulcanized, which may tend to generate bare portions (air pockets). According to the third embodiment, however, it is difficult for air accumulated at the apex of the projection 20 in the mold for forming a tire to move during tire vulcanization. Bare portions are thus less likely to occur, and even if they do occur, they are less noticeable as a result of the uneven surface 24 at the apex. The degradation in the appearance due to the bare portions is thus suppressed. To increase turbulence and improve the effect of cooling the tire side portion 1d, the number of uneven surfaces is preferably large.

The undulation height of the uneven surface 24 (H1 - H2) is preferably 20% to 70% of the height H1 of the turbulence-generating projection 20. By thus limiting the undulation height (H1 - H2) of the uneven surface 24 to a predetermined value, the occurrence of bare portions can be further suppressed.

The uneven surface 24 has the shape of substantially triangular cross-sections continuously arranged in the tire radial direction, which is a relatively simple shape that has the effect of simplifying the structure of the mold for forming a tire.

The tire 1 according to the fourth embodiment of the present invention is described below with reference to FIGS. 10 to 12.

In the tire 1 of the fourth embodiment, the tire side portion 1d includes a first rigidity portion, in which a first rubber member formed by a rubber member and having a predetermined rigidity is used, and a second rigidity portion, in which a second rubber member having a rigidity higher than the predetermined rigidity is used. The turbulence-generating projections F are only provided in the first rigidity portion.

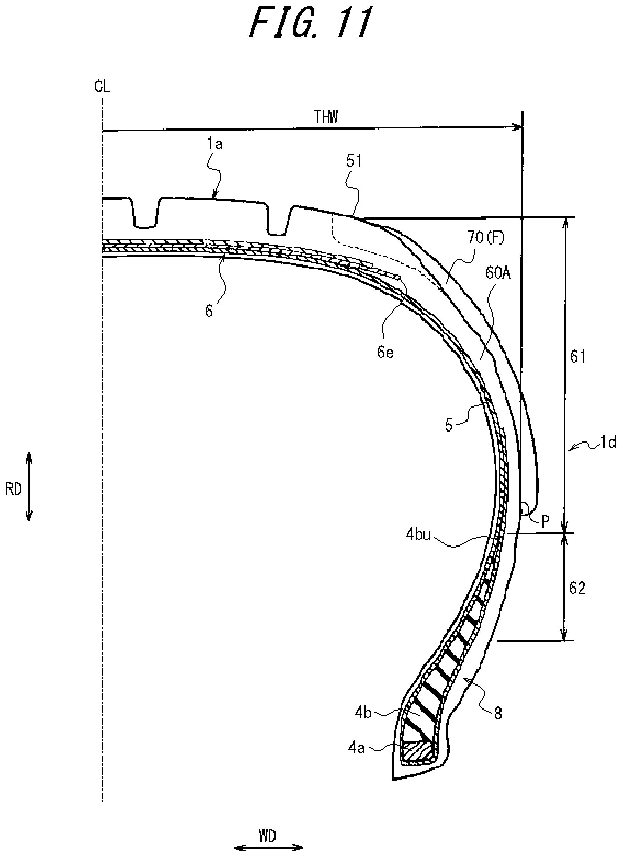

As illustrated in FIG. 11, the tire side portion 1d includes a low-rigidity portion 61 (first rigidity portion) and a high-rigidity portion 62 (second rigidity portion). In the low-rigidity portion 61, a first rubber member formed by a rubber member and having a predetermined rigidity is used. In the present embodiment, the first rubber member is the portion of the side rubber 8 of the tire side portion 1d in the region from the ground edge 51, which is located farthest outward in the tire width direction when the tread portion 1a contacts the road surface, to the tire radial outer end 4bu of the bead filler 4b (hereinafter referred to as the side rubber portion 60A). For example, rubber with a Young's modulus of 5 MPa to 7 MPa (at 25°C) is used in the side rubber portion 60A.

A second rubber member having a higher rigidity than the rigidity of the first rubber member, i.e., than the rigidity of the side rubber portion 60A, is used in the high-rigidity portion 62. In the present embodiment, the second rubber member is the bead filler 4b. For example, rubber with a Young's modulus of 50 MPa to 500 MPa, particularly 110 MPa to 130 MPa (at 25°C), is preferably used in the bead filler 4b.

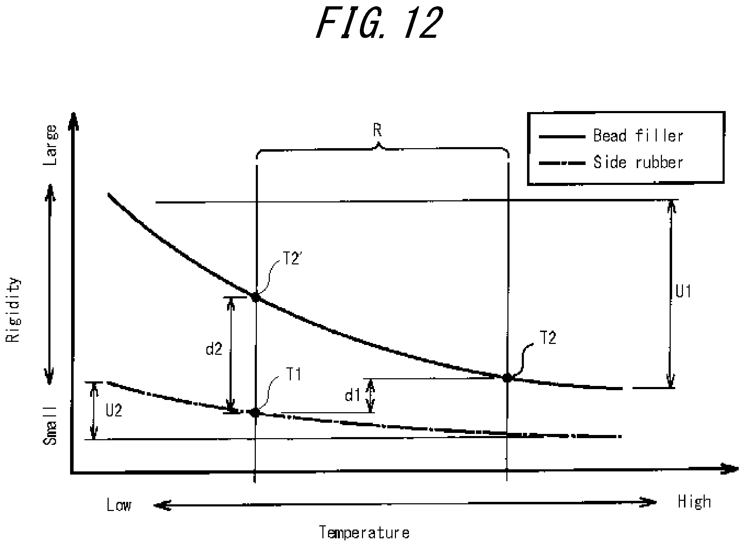

Here, the temperature dependence of the bead filler 4b is greater than the temperature dependence of the side rubber portion 60A. The temperature dependence is the property whereby the rigidity of a tire component changes in response to a change in the temperature of the tire component that forms part of the tire. In the present embodiment, the rigidity of the bead filler 4b is higher than the rigidity of the side rubber portion 60A. The temperature dependence of the bead filler 4b is therefore greater than the temperature dependence of the side rubber portion 60A. In other words, as illustrated in FIG. 12, the change in rigidity (U1) of the bead filler 4b due to a change in temperature is greater than the change in rigidity (U2) of side rubber portion 60A due to a change in temperature.

Turbulence-generating projections 70(F) extending along the tire radial direction RD are provided in at least a portion of this tire side portion 1d.

As illustrated in FIGS. 10 and 11, the turbulence-generating projection 70 projects from the surface of the tire side portion 1d. The cross-sectional shape of the turbulence-generating projection 70 orthogonal to the extending direction thereof is rectangular.

The turbulence-generating projections 70 are provided only in the low-rigidity portion 61, i.e., only in the side rubber portion 60A. Specifically, the turbulence-generating projections 70 are provided only in the region from the ground edge 51 to the tire radial outer end 4bu of the bead filler 4b. In other words, the turbulence-generating projections 70 are provided at a position not in overlap with the bead filler 4b in the tire width direction.

The cross-sectional shape of the turbulence-generating projection 70 does not necessarily have to be rectangular and may be any of various shapes, such as a trapezoid or semi-circular arc. It suffices for the turbulence-generating projection 70 to be provided within the region from the ground edge 51 to the tire radial outer end 4bu of the bead filler 4b, and a plurality thereof may be provided separately.

For example, if turbulence-generating projections are provided on the entire surface of the tire side portion, the entire surface of the tire side portion is cooled by the turbulence-generating projections. However, if the temperature of the entire tire side portion decreases, then the rigidity difference (d2) between the rigidity of the bead filler (for example, T1) and the rigidity of the side rubber portion (for example, T2') is large, as illustrated in FIG. 12. Therefore, the less the bead filler flexes (deforms), the more the tire side portion flexes. As a result, distortion tends to be concentrated at a tire widthwise end 6e of the belt 6 (hereinafter the belt end 6e), which may cause separation at the belt end 6e.

Therefore, in the fourth embodiment, the turbulence-generating projections 70 are provided only in the low-rigidity portion 61 (side rubber portion 60A). In other words, the turbulence-generating projections 70 do not overlap in the tire width direction with the high-rigidity portion 62 (bead filler 4b), which has higher rigidity than the side rubber portion 60A. Therefore, the turbulence caused by the turbulence-generating projections 70 as the tire 1 rotates will cool only the side rubber portion 60A.

Since the side rubber portion 60A is cooled by turbulence, its temperature does not rise easily, resulting in less rigidity loss. On the other hand, the bead filler 4b, which has greater temperature dependence than the side rubber portion 60A, is not cooled by turbulence, and thus its temperature rises, causing a gradual decrease in rigidity. Therefore, as illustrated in FIG. 12, the rigidity difference between the rigidity of the side rubber portion 60A and the rigidity of the bead filler 4b becomes smaller as the rigidity of the bead filler 4b gradually decreases in a predetermined temperature range R.

Accordingly, in a temperature range of the tire when the vehicle is traveling at very high speed (a predetermined temperature range R), for example, the rigidity difference (d1) between the rigidity of the side rubber portion 60A (for example, T1) and the rigidity of the bead filler 4b (for example, T2) can be reduced, as illustrated in FIG. 12, making it easier for the bead filler 4b to flex together with the side rubber portion 60A.

This can prevent the concentration of distortion (deformation) at the belt end 6e due to the rigidity difference between the rigidity of the side rubber portion 60A and the rigidity of the bead filler 4b in the temperature range of the tire when the vehicle is traveling at very high speed, for example. As a result, separation at the belt end 6e can be reliably suppressed.

Since the turbulence-generating projections 70 do not overlap in the tire width direction with the high-rigidity portion 62 (bead filler 4b), which has a higher rigidity than the side rubber portion 60A, the thickness of the side rubber portion 60A does not increase at the tire widthwise outer side of the bead filler 4b due turbulence-generating projections projecting from the surface of the tire side portion. Therefore, even when the vehicle travels at very high speed, the side rubber portion 60A and the bead filler 4b reliably flex together, and the concentration of strain on the belt end 6e can be reliably suppressed.

The tire 1 according to the fifth embodiment of the present invention is described below with reference to FIGS. 13 to 15.

In the tire 1 of the fifth embodiment, the projection width, defined as the length of the turbulence-generating projection F in the tire circumferential direction, varies in the tire radial direction and widens toward a projection outer end located on the tire radial outer side, and the height of the turbulence-generating projection F relative to the tire outer surface 1ds of the tire side portion 1d varies in the tire radial direction and is formed to decrease gradually toward the projection outer end.

A plurality of turbulence-generating projections 110 (F) project from the tire outer surface 1ds of the tire side portion 1d, extend along the tire radial direction, and are arranged at intervals in the tire circumferential direction. The turbulence-generating projections 110 are arranged radially, centering on the tire rotation axis, on the tire outer surface 1ds of the tire side portion 1d, as illustrated in FIG. 13.

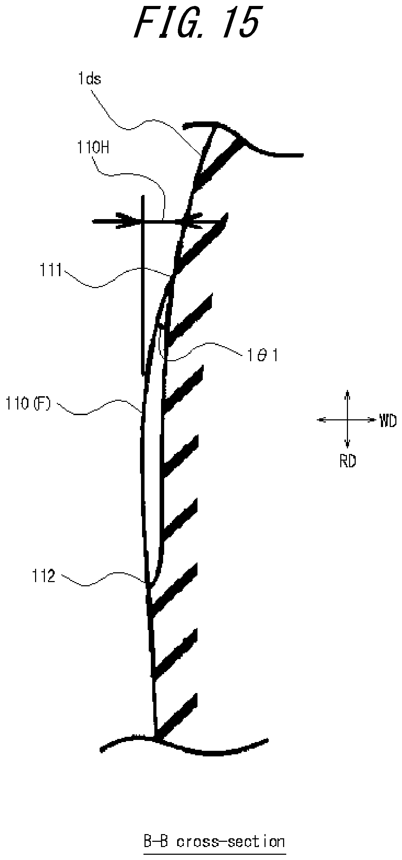

The turbulence-generating projection 110 is an elongated projection for generating or promoting turbulence on the tire outer surface of the tire side portion 1d during rotation of the tire 1. As illustrated in FIG. 15, the projection outer end 111, which is the outer end of the turbulence-generating projection 110 in the tire radial direction, is formed with a slope so that the height 110H gradually becomes lower toward the edge. The tire widthwise outer surface of the turbulence-generating projection 110 at the projection outer end 111 (the surface visible from the tire side) is continuous with the tire outer surface 1ds of the tire side portion 1d so as to be flush with the tire outer surface 1ds. As illustrated in FIG. 15, the maximum angle 1θ1 between the tire widthwise outer surface of the turbulence-generating projection 110 at the projection outer end 111 and the tire outer surface 1ds of the tire side portion is set to be 25° or less. Specifically, the maximum angle 1θ1 is approximately 22° in the present embodiment.

The projection inner end 112, which is the inner end of the turbulence-generating projection 110 in the tire radial direction, is formed to be smoothly continuous with the tire outer surface 1ds, which rises up from the bead portion 1c and extends from the rim guard in the tire radial direction, so as to be flush with the tire outer surface 1ds.

On the tire radial outer side of the turbulence-generating projection 110, characters and symbols for conveying information are provided. These characters and symbols are protrusions 130 that project from the tire side portion 1d. These protrusions 130 also generate turbulence in the fluid passing along the tire side portion 1d and thus have a cooling effect on the tire side portion 1d.

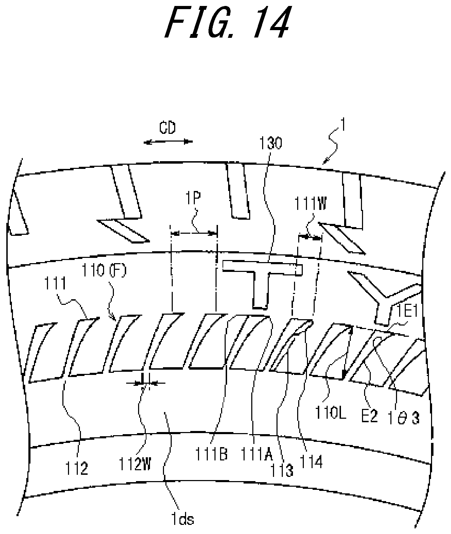

The radial length 110L (FIG. 14), which is the length of the turbulence-generating projection 110 in the tire radial direction, is 12 mm, for example. The maximum height 110H (FIG. 15) of the turbulence-generating projection 110 relative to the tire outer surface 1ds of the tire side portion 1d is, for example, 0.7 mm. The length 130L of the protrusion 130 in the tire radial direction is, for example, 10 mm.

In the present embodiment, as illustrated in FIG. 14, turbulence-generating projections 110 adjacent to each other are set at predetermined intervals. The projection width of the turbulence-generating projection 110 varies so as to widen towards the tire radial outer side (the tread portion 1a side). The interval 1P (FIG. 14) between the turbulence-generating projections 110 is, for example, 11 mm.

For example, the projection width 111W (FIG. 14) of the projection outer end 111 of the turbulence-generating projection 110 is 4.665 mm to 7.141 mm, and the projection width 112W (FIG. 14) of the projection inner end 112 is 1.202 mm to 1.454 mm. The projection width 111W of the projection outer end 111 and the projection width 112W of the projection inner end 112 can be adjusted as needed for each tire size.

Specifically, for example, the projection width 111W of the projection outer end 111 of a 225/50F17 tire is 7.141 mm, the projection width 112W of the projection inner end 112 is 1.202 mm, and the ratio of the projection width 111W of the projection outer end 111 to the projection width 112W of the projection inner end 112 is 5.941. The projection width 111W of the projection outer end 111 of a 225/45F17 tire is 5.378 mm, the projection width 112W of the projection inner end 112 is 1.454 mm, and the ratio of the projection width 111W of the projection outer end 111 to the projection width 112W of the projection inner end 112 is 3.699. The projection width 111W of the projection outer end 111 of a 245/40F18 tire is 4.665 mm, the projection width 112W of the projection inner end 112 is 1.346 mm, and the ratio of the projection width 111W of the projection outer end 111 to the projection width 112W of the projection inner end 112 is 3.466. The projection width 111W of the projection outer end 111 of a 225/50F16 tire is 6.844 mm, the projection width 112W of the projection inner end 112 is 1.392 mm, and the ratio of the projection width 111W of the projection outer end 111 to the projection width 112W of the projection inner end 112 is 4.917.

The projection width 111W is configured to have a length of 25% or more of the interval 1P of the turbulence-generating projections 110. Specifically, the projection width 111W of the projection outer end 111 is 50% or more of the interval 1P between adjacent turbulence-generating projections 110. In addition, the adjacent turbulence-generating projections 110 are configured not to be connected. The aforementioned interval 1P between the turbulence-generating projections 110 is the distance between points bisecting the width of the turbulence-generating projections 110 in the tire circumferential direction.

The shapes of the two sides of the turbulence-generating projection in the longitudinal direction differ from each other. The shape of one side is substantially parallel to the longitudinal direction and is substantially straight. The shape of the other side has a gently sloping portion 113, which is substantially parallel to the one side, and a steeply sloping portion 114, which is more inclined relative to the longitudinal direction than the gently sloping portion 113. The area near the projection outer end 111 is the steeply sloping portion 114. Therefore, the turbulence-generating projection 110 has an increasingly larger projection width toward the projection outer end 111.

Of the width ends 111A and 111B, which are the ends in the tire circumferential direction of the projection outer end 111 of the turbulence-generating projection 110, one width end 111A is formed so that the angle 1θ3 between a circumferential side 1E1 extending in the tire circumferential direction and a radial side 1E2 extending in the tire radial direction is 90° or less. According to such a configuration, at least one end of the projection outer end in the tire circumferential direction is 90° or less, i.e., an acute angle, which facilitates extraction of the tire from the mold during manufacturing and also facilitates the release of air to the tire surface during vulcanization, effectively suppressing the occurrence of bare portions during manufacturing and reducing the probability of a defective shape or defective appearance.

According to the tire 1 of the fifth embodiment, the temperature of the tire side portion 1d can be reduced by the turbulence-generating projections 110, since the turbulence-generating projections 110 are provided on the tire side portion 1d. In addition, since the height of the projection outer end 111 of the turbulence-generating projection 110 gradually decreases toward the surface of the tire side portion, the occurrence of chips and broken-off portions of the turbulence-generating projections 110 is reduced and bare portions are less likely to occur when the raw tire is vulcanized in the mold for forming a tire.

Furthermore, the projection width 111W at the projection outer end 111 of the turbulence-generating projection 110 is 2.0 times or more the projection width 112W at the projection inner end 112 of the turbulence-generating projection 110. A sufficient temperature reduction effect can thereby be obtained while avoiding the problem of heat storage.

The maximum angle 1θ1 between the tire widthwise outer surface of the turbulence-generating projection 110 and the tire outer surface 1ds of the tire side portion is set to be 25° or less (for example, approximately 22°). Therefore, the occurrence of chips and broken-off portions of the projection outer end 111 of the turbulence-generating projection 110 is reduced and bare portions are less likely to occur when the raw tire is vulcanized in the mold for forming a tire during manufacturing.

Furthermore, since the projection width 111W is 25% or more of the interval 1P between turbulence-generating projections 110, and adjacent turbulence-generating projections 110 are not connected to each other, a temperature rise due to heat storage caused by an excessively large projection width and a decrease in rigidity due to an excessively narrow projection width can be avoided while effectively achieving the diffusion of turbulence. A heat storage suppression function and a turbulence promotion function (cooling function) can thus both be achieved.

The width end 111A of the projection outer end 111 of the turbulence-generating projection 110 is formed so that the angle 1θ3 between the circumferential side 1E1 extending in the tire circumferential direction and the radial side 1E2 extending in the tire radial direction is 90° or less, which facilitates extraction from the mold during manufacturing and also facilitates the release of air to the tire surface during vulcanization. This effectively suppresses the occurrence of bare portions during manufacturing and reduces the probability of a defective shape or defective appearance.

Since the projection inner end 112 of the turbulence-generating projection 110 is continuous so as to be flush with the tire outer surface 1ds, the rigidity of the projection inner end 112 can be enhanced to suppress damage, such as chips and broken-off portions. This also suppresses the occurrence of bare portions during manufacturing and reduces the probability of a defective shape or defective appearance.

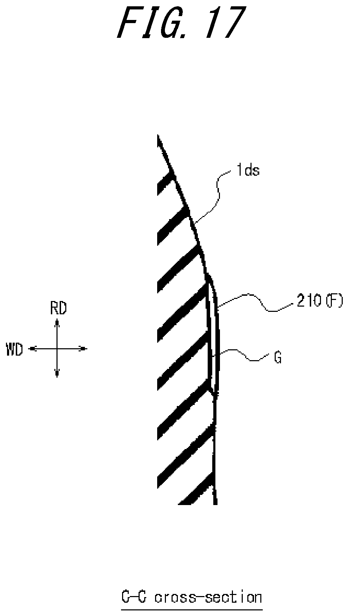

The tire 1 according to the sixth embodiment of the present invention is described below with reference to FIGS. 16 and 17.

In the tire 1 of the sixth embodiment, the tire side portion 1d has provided thereon a first region in which a plurality of the turbulence-generating projections F are arranged adjacent to each other, and a second region at least partially overlapping the first region in the tire circumferential direction and not having any turbulence-generating projections F arranged therein. A protrusion projecting from the tire outer surface 1ds of the tire side portion 1d is formed in the second region. The protrusion has the shape of characters and symbols displaying information or the shape of figures and patterns displaying a design. The protrusion has a height from the tire outer surface 1ds of the tire side portion 1d that is from 50% to 100% of the height of the turbulence-generating projection F from the tire outer surface 1ds of the tire side portion 1d.

As illustrated in FIG. 16, the tire outer surface 1ds of the tire side portion 1d has provided thereon a first region 2R1 in which a plurality of turbulence-generating projections 210 (F) are arranged adjacent to each other and a second region 2R2 in which no turbulence-generating projections 210 (F) are arranged adjacent to each other. In the second region 2R2, a plurality of protrusions 220 are arranged adjacent to each other. The first region 2R1 and the second region 2R2 are arranged to partially overlap in the tire circumferential direction.

The plurality of turbulence-generating projections 210 (F) project from the tire outer surface 1ds of the tire side portion 1d, extend along the tire radial direction, and are arranged at intervals in the tire circumferential direction. The turbulence-generating projections 210 are arranged radially, centering on the tire rotation axis, on the tire outer surface 1ds of the tire side portion 1d, as illustrated in FIG. 16. Each turbulence-generating projection 210 extends so that the longitudinal direction is along the tire radial direction. A cross-section of the turbulence-generating projection 210 in the tire circumferential direction is formed to have a rectangular shape. The turbulence-generating projection 210 is an elongated projection for generating or promoting turbulence on the tire outer surface 1ds of the tire side portion 1d during rotation of the tire 1.

The plurality of protrusions 220 project from the tire outer surface 1ds of the tire side portion 1d and are arranged at intervals in the tire circumferential direction. As illustrated in FIG. 16, the protrusions 220 are in the shape of characters, recognizable when viewed from the outside of the tire side portion 1d, and display predetermined information. A cross-section of the protrusions 220 in the tire circumferential direction is formed to have a rectangular shape. The protrusions 220 generate or promote turbulence on the outer circumferential surface of the tire side portion 1d during rotation of the tire 1.

Projections 230 project from the tire outer surface 1ds of the tire side portion 1d. The projections 230 are arranged at intervals along the tire circumferential direction on the tire radial inner side of the protrusions 220. The projections 230 generate or promote turbulence on the outer circumferential surface of the tire side portion 1d during rotation of the tire 1. The projections 230 are arranged radially, centering on the tire rotation axis, on the tire outer surface 1ds of the tire side portion 1d, as illustrated in FIG. 16.

Each projection 230 extends so that the longitudinal direction is along the tire radial direction. A cross-section of the projections 230 in the tire circumferential direction is substantially rectangular. The pitch of the projections 230 in the tire circumferential direction is the same length as the pitch 2P of the turbulence-generating projections 210 in the tire circumferential direction.

By the turbulence-generating projections 210 (F) thus being arranged in the first region 2R1 and the projections 230 and protrusions 220 being arranged in the second region 2R2, turbulence can be generated or promoted over the entire circumference of the tire outer surface 1ds of the tire side portion 1d to effectively reduce the tire temperature.

The mechanism of turbulence generation is now explained. As the tire 1 rotates, the air flow S1 in contact with the tire outer surface 1ds of the tire side portion 1d where the turbulence-generating projection 210 or protrusion 220 is not formed is detached from the tire outer surface 1ds by the turbulence-generating projection 210 or protrusion 220 and overcomes the turbulence-generating projection 210 or protrusion 220. On the back side of the turbulence-generating projection 210 or the protrusion 220, a portion (region) S2 is created in which the air flow is stagnant.

The air flow S1 then reattaches to the bottom between the back side and the next turbulence-generating projection 210 or protrusion 220 and is detached again at the next turbulence-generating projection 210 or protrusion 220. At this time, a portion (region) S3 is created in which the air flow is stagnant between the air flow S1 and the next turbulence-generating projection 210 and the like. Here, increasing the velocity gradient (speed) over the region in contact with the turbulence S1 is considered advantageous for increasing the cooling effect. In other words, provision of the turbulence-generating projections 210 and protrusions 220 on the tire outer surface 1ds of the tire side portion 1d generates the air flow S1 with a high flow rate and the stagnant portions S2, S3 and promotes the generation of turbulence on the tire outer surface 1ds of the tire side portion 1d, thereby enhancing the cooling effect of the tire side portion 1d.

The projections 230 on the tire radial inner side in the tire side portion 1d also contribute to heat dissipation on the tire radial outer side. Specifically, a centrifugal force during rotation of the tire 1 causes air to flow from the inside to the outside in the tire radial direction. The projections 230 provided on the tire radial inner side thereby also contribute to heat dissipation on the tire radial outer side. By the turbulence-generating projections 210 and the projections 230 being provided at least in a portion on the tire radial inner side of the tire side portion 1d, heat dissipation can be promoted not only in the portion on the tire radial inner side but also the portion on the tire radial outer side, thereby efficiently enhancing the cooling effect on the entire tire outer surface 1ds of the tire side portion 1d.

In the tire 1 of the present embodiment, the height 210H of the turbulence-generating projection 210 from the tire outer surface 1ds is, for example, 0.7 mm. The height 220H of the protrusion 220 from the tire outer surface 1ds is, for example, 0.6 mm. The height 220H of the protrusion 220 is preferably in a range of 50% to 100% of the height 210H of the turbulence-generating projection 210, for example 86%. If the height 220H of the protrusion 220, the height 210H of the turbulence-generating projection 210, and the height 230H of the projection 230 are too large, the deformation of the tire side portion during rolling becomes difficult to follow, and subjection to repeated deformation may concentrate strain especially at the base of the turbulence-generating projection, causing cracks to occur.

On the other hand, if the height 220H of the protrusion 220 is too small relative to the height 210H of the turbulence-generating projection 210, i.e., less than 50% of the height 210H of the turbulence-generating projection 210, then the visibility of the characters may be reduced, or the turbulence generation effect may not be sufficiently obtained. Therefore, the height 220H of the protrusion 220 is preferably within a range of 50% to 100% of the height 210H of the turbulence-generating projection 210.

The protrusion 220 is arranged so as to overlap, in the tire circumferential direction, a tire radial outer end 210X of the turbulence-generating projection 210. In other words, the protrusion 220 is arranged on a virtual line 2C1 extending in the tire circumferential direction through the outer end 210X of the turbulence-generating projection 210. An outer end 220X of the protrusion 220 is disposed farther outward in the tire radial direction than the outer end 210X of the turbulence-generating projection 210, and the length 221L (FIG. 16) in the tire radial direction from the outer end 220X of the protrusion 220 to the outer end 210X of the turbulence-generating projection 210 is, for example, 6.4 mm.

The length 221L (FIG. 16) in the tire radial direction from the outer end 220X of the protrusion 220 to the outer end 210X of the turbulence-generating projection 210 is preferably 2 mm to 8 mm. The distance in the tire radial direction between the projection 230 and the protrusion 220 is preferably set from approximately 1.5 mm to 3 mm, more preferably 2 mm. The distance between the turbulence-generating projection 210 and the protrusion 220 is preferably set from approximately 6 mm to 12 mm in the circumferential direction.

A tire radial inner end 230Y of the projection 230 is arranged so as to overlap, in the tire circumferential direction, a tire radial inner end 210Y of the turbulence-generating projection 210. In other words, the projection 230 is arranged on a virtual line 2C2 extending in the tire circumferential direction through the inner end 210Y of the turbulence-generating projection 210. By the protrusions 220 and the projections 230 being arranged in this manner, air moving along the tire circumferential direction can continuously contact the turbulence-generating projections 210 and the protrusions 220.

The length 220L of the protrusion 220 in the tire radial direction is from 30% to 80% of the length 220L of the turbulence-generating projection 210 in the tire radial direction. If the length 220L of the protrusion 220 is too small relative to the length 210L of the turbulence-generating projection 210, i.e., less than 30%, then the visibility of the characters may be reduced, or the turbulence generation effect may not be sufficiently obtained. Therefore, the length 220L of the protrusion 220 is preferably within a range of 30% to 80% of the length 210L of the turbulence-generating projection 210.

According to the tire 1 configured as described above, the turbulence-generating projections 210 are provided in the first region 2R1, and the protrusions 220 and projections 230 are provided in the second region 2R2. This enables a reduction in the temperature of the second region 2R2 through the protrusions 220 and the projections 230 while maintaining the effect of reducing the temperature in the first region 2R1 through the turbulence-generating projections. In addition, since characters can be displayed by the protrusions 220, the effect of reducing the temperature through air turbulence and the effect of conveying information can both be achieved.

The tire 1 according to the seventh embodiment of the present invention is described below with reference to FIGS. 18 to 21.

The tire 1 of the seventh embodiment further includes a circumferential projection projecting from the tire outer surface 1ds of the tire side portion 1d and extending in the tire circumferential direction. An end of the turbulence-generating projection F in the tire radial direction is connected to the circumferential projection, and the height of the end of the turbulence-generating projection F relative to the tire outer surface 1ds of the tire side portion 1d is lower than the height of the circumferential projection relative to the tire outer surface 1ds of the tire side portion 1d at a portion at which the end of the turbulence-generating projection F and the circumferential projection are connected in the tire radial direction.

Also, in the tire 1 of the seventh embodiment, in the tire side portion 1d, the tire 1 has a tire maximum width region TR that includes a position at which a length of the tire in the tire width direction is maximized, an end of the turbulence-generating projection F in the tire radial direction is located in the tire maximum width region TR, the tire 1 includes a circumferential projection projecting from the tire outer surface 1ds of the tire side portion 1d and extending in the tire circumferential direction, the end of the turbulence-generating projection F is connected to the circumferential projection, and the width of the circumferential projection in the tire radial direction is narrower than the maximum width of the turbulence-generating projection F in the tire circumferential direction.

As illustrated in FIG. 18, a plurality of turbulence-generating projections 310 (F) are arranged on the tire outer surface 1ds of the tire side portion 1d. In addition, a circumferential projection 315 extending in the tire circumferential direction is arranged on the tire outer surface 1ds of the tire side portion 1d. Therefore, the tire 1 includes the turbulence-generating projections 310 and the circumferential projection 315. The tire outer surface 1ds of the tire side portion 1d is configured by a tire outer surface 3A, a tire outer surface 3B, and a tire outer surface 3C. The tire outer surface 3A of the tire side portion 1d is the surface between the tire outer surface 3B and the tire outer surface 3C in the tire radial direction. The tire outer surface 3B of the tire side portion 1d is the surface located on the tire radial inner side of the turbulence-generating projections 310. The tire outer surface 3C of the tire side portion 1d is the surface located on the tire radial outer side of the circumferential projection 315.

The tire 1 has a maximum tire width that is the maximum length of tire 1 in the tire width direction. The maximum tire width referred to here does not, for example, include the maximum width between rim guards in the tire width direction in a tire that is provided with rim guards. In other words, the maximum tire width does not include the rim guards. The height of the tire maximum width position (maximum width height SWH) with respect to the height of the inner end of the bead portion 1c in the radial direction is located at 48% or more of the height of the tread surface (tread surface height TH) on the tire equatorial plane CL with respect to the height of the inner end of the bead portion 1c in the radial direction when the tire is not inflated.

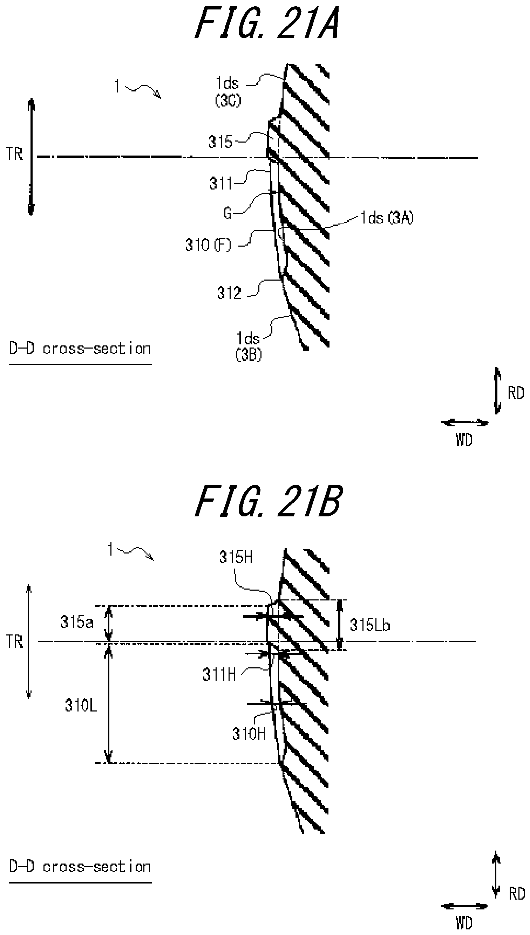

In the tire side portion 1d, the tire 1 has a tire maximum width region TR (FIG. 21) that includes the tire maximum width position at which the length of the tire 1 in the tire width direction is maximized. In other words, the maximum width region TR is the surface of the tire side portion 1d, in the tire radial direction, located at a height including the maximum width height SWH (FIG. 21). The range of the tire maximum width region TR in the tire radial direction is a region within 25% of the tread surface height TH. The tire maximum width position (indicated by a dashed dotted line in FIG. 21) is located at the tire radial center of the tire maximum width region TR.

For example, the maximum width region TR in the tire radial direction is a range of 60 mm. In this case, the range of the tire maximum width region TR in the tire radial direction is centered on the tire maximum width position and extends 30 mm outward in the tire radial direction and 30 mm inward in the tire radial direction.

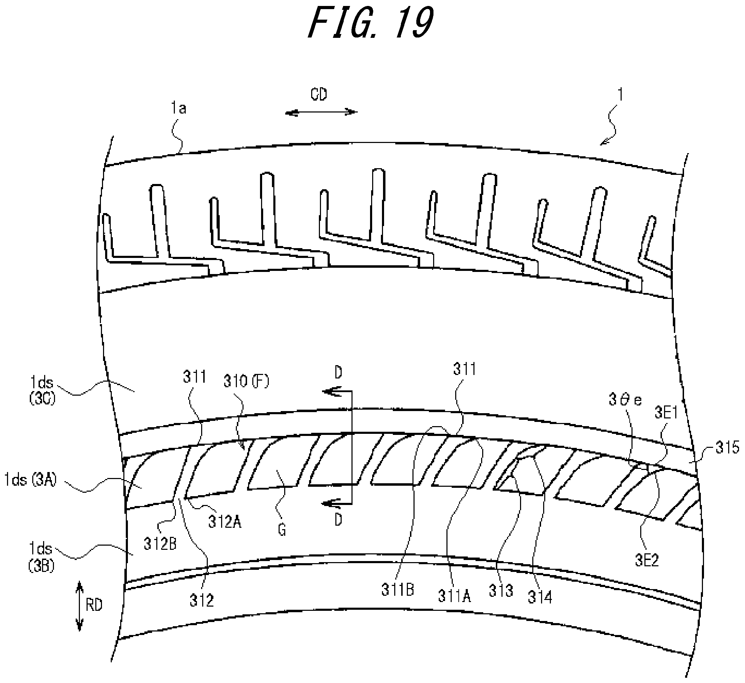

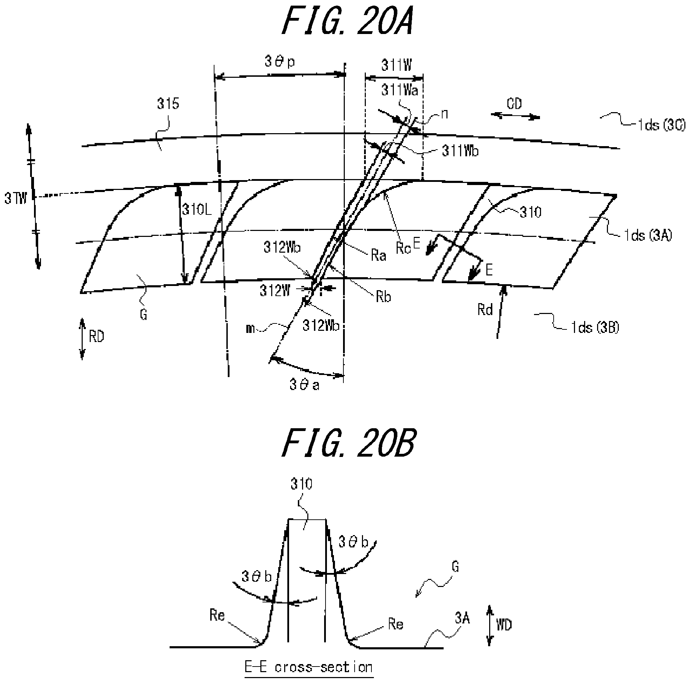

FIG. 19 is a partially enlarged view of the turbulence-generating projection 310 illustrated in FIG. 18. FIG. 20A is a partially enlarged view of the turbulence-generating projection 310 illustrated in FIG. 18. FIG. 20B is a cross-sectional view orthogonal to the extending direction of the turbulence-generating projection 310 illustrated in FIG. 20A. Specifically, FIG. 20B is an E-E cross-sectional view of FIG. 20A. FIG. 21A is a partial cross-sectional view of the tire 1 along the tire width direction and the tire radial direction. FIG. 21B is a partial cross-sectional view of the tire 1 along the tire width direction and the tire radial direction. Specifically, FIG. 21A and 21B are D-D cross-sectional views of FIG. 19.

In the tire 1 of the present embodiment, a plurality of turbulence-generating projections 310 are provided on the tire outer surface 3A of the tire side portion 1d to generate or promote turbulence, thereby enhancing the cooling effect at the tire side portion 1d.

The plurality of turbulence-generating projections 310 project from the tire outer surface 3A of the tire side portion 1d, extend along the tire radial direction, and are arranged at intervals in the tire circumferential direction. The turbulence-generating projections 310 are arranged radially, centering on the tire rotation axis, on the tire outer surface 3A of the tire side portion 1d, as illustrated in FIG. 18. The turbulence-generating projection 310 extends at an inclination relative to the tire radial direction. Therefore, the length of the turbulence-generating projection 310 in the extending direction is longer than the length of the turbulence-generating projection 310 along the tire radial direction. The ends of the turbulence-generating projection 310 in the tire radial direction have a projection outer end 311 located on the outer side of the turbulence-generating projection 310 in the tire radial direction and a projection inner end 312 located on the inner side of the turbulence-generating projection 310 in the tire radial direction. The circumferential projection 315 projects from the tire outer surface 3A of the tire side portion 1d and extends along the tire circumferential direction. The circumferential projection 315 is annular as viewed from the tire radial direction.

The turbulence-generating projection 310 is an elongated projection for generating or promoting turbulence on the tire outer surface 1ds of the tire side portion 1d during rotation of the tire 1. As illustrated in FIG. 21, the projection outer end 311, which is the outer end of the turbulence-generating projection 310 in the tire radial direction, is located in the tire maximum width region TR. The projection outer end 311 is connected to the circumferential projection 315. Specifically, the projection outer end 311 is connected to the surface on the inner side of the circumferential projection 315 in the tire radial direction. The projection outer end 311 is in contact with the surface on the inner side of the circumferential projection 315 in the tire radial direction.

At the portion where the projection outer end 311 and the circumferential projection 315 are connected, a height 311H of the projection outer end 311 relative to the tire outer surface 3A of the tire side portion 1d (FIG. 21B) is lower than a height 315H of the circumferential projection 315 relative to the tire outer surface 3A of the tire side portion 1d (FIG. 21B). In other words, the height 315H of the circumferential projection 315 relative to the tire outer surface 3A of the tire side portion 1d is higher than the height 311H of the projection outer end 311 relative to the tire outer surface 3A of the tire side portion 1d. Therefore, a step with different heights along the tire width direction is formed at the portion where the projection outer end 311 and the circumferential projection 315 are connected.

The projection inner end 312 of the turbulence-generating projection 310 is smoothly connected to the tire outer surface 3B of the tire side portion 1d, which is on the tire radial inner side of the turbulence-generating projection 310. In other words, no step with different heights along the tire width direction is formed at the portion where the projection inner end 312 and the tire outer surface 3B are connected. In the portion where the projection inner end 312 and the tire outer surface 3B are connected, the height of the projection inner end 312 relative to the tire outer surface 3A of the tire side portion 1d is the same as the height of the tire outer surface 3B relative to the tire outer surface 3A of the tire side portion 1d. In other words, the projection inner end 312 of the turbulence-generating projection 310 is continuous so as to be flush with the tire outer surface 3B. Therefore, the rigidity of the projection inner end 312 can be enhanced to suppress damage, such as chips and broken-off portions. This also suppresses the occurrence of bare portions during manufacturing and reduces the probability of a defective shape or defective appearance.

On the tire outer surface 3C of the tire side portion 1d, which is on the tire radial outer side of the circumferential projection 315, characters and symbols for conveying information are provided.

In the present embodiment, as illustrated in FIG. 19, turbulence-generating projections 310 adjacent to each other are set at predetermined intervals. The projection width, which is the width of the turbulence-generating projection 310 in the tire circumferential direction, varies so as to widen towards the tire radial outer side (the tread portion 1a side). Therefore, the centrifugal force generated by tire rotation and vehicle travel causes the fluid moving from the inside to the outside in the tire radial direction to contact the turbulence-generating projection 310, thereby enhancing the effect of cooling the temperature of the tire side portion 1d. In addition, the fluid moving outward in the tire radial direction can be easily guided to the turbulence-generating projection 310 adjacent in the tire circumferential direction, thereby enhancing the cooling effect over the entire tire side portion 1d.

The shapes of the two sides of the turbulence-generating projection 310 in the longitudinal direction (i.e., the extending direction of the turbulence-generating projection 310) differ from each other. The shape of one side is substantially parallel to the longitudinal direction and is substantially straight. The shape of the other side has a gently sloping portion 313, which is substantially parallel to the one side, and a steeply sloping portion 314, which is more inclined relative to the longitudinal direction than the gently sloping portion 313. The area near the projection outer end 311 is the steeply sloping portion 314. Therefore, the turbulence-generating projection 310 has an increasingly larger projection width toward the projection outer end 311.

Of the width ends 311A and 311B, which are the ends in the tire circumferential direction of the projection outer end 311 of the turbulence-generating projection 310, one width end 311A is formed so that the angle 3θe (FIG. 19) between a circumferential side 3E1 extending in the tire circumferential direction and a radial side 3E2 extending in the tire radial direction is 90° or less.

The projection inner end 312 of the turbulence-generating projection 310 includes width ends 312A and 312B, which are ends in the tire circumferential direction. A line that, when viewed from the tire width direction, passes through the approximate tire circumferential center of the width ends 312A and 312B and is substantially parallel to the surface on the width end 312B side in the tire circumferential direction is designated as a line m (FIG. 20A). A line that passes through the boundary between the gently sloping portion 313 and the steeply sloping portion 314 and is parallel to the line m is designated as a line n (FIG. 20A). The distance 311Wa between the line m and the line n is, for example, 1.4 mm in the present embodiment. The distance 311Wb between the width end 311B and the line m is, for example, 1.2 mm. The projection width 311W of the projection outer end 311 of the turbulence-generating projection 310 is, for example, 4.7 mm to 7.1 mm.

The distance 312Wa between the line m and one width end 312A of the width ends 312A and 312B, which are the ends in the tire circumferential direction of the projection inner end 312 of the turbulence-generating projection 310, is 0.7 mm, for example, in the present embodiment. The distance 312Wb between the line m and the other width end 312B is, for example, 0.8 mm in the present embodiment. The projection width 312W of the projection inner end 312 is, for example, 1.2 mm to 1.5 mm. The projection width 311W of the projection outer end 311 and the projection width 312W of the projection inner end 312 can be adjusted as needed for each tire size.

The length 310L (FIG. 20A) in the tire radial direction from the projection outer end 311 to the projection inner end 312 of the turbulence-generating projection 310 is preferably in a range of 8 mm to 30 mm.

In the present embodiment, one side of the turbulence-generating projection 310 as viewed from the tire width direction is arc-shaped. The radius of curvature Ra of the one side of the turbulence-generating projection 310 is, for example, constant at 180 mm. As viewed from the tire width direction, the gently sloping portion 313 has an arc-shaped side surface. The radius of curvature Rb of the side surface of the gently sloping portion 313 is, for example, constant at 180 mm. As viewed from the tire width direction, the steeply sloping portion 314 has an arc-shaped side surface. The radius of curvature Rc of the side surface of the steeply sloping portion 314 is, for example, 0.8 times the length 310L. The radius of curvature Rc is preferably in a range of 12 mm to 20 mm. The end of the tire outer surface 3B of the tire side portion 1d in the tire radial direction extends along the tire circumferential direction.

The end of the tire outer surface 3B in the outer tire radial direction is arc-shaped when viewed from the tire width direction. The number and pitch angle 3θp of the turbulence-generating projections 310 may be determined by the radius of curvature Rd of the end of the tire outer surface 3B on the tire radial outer side. For example, in a case in which the radius of curvature Rd is 147.2 mm to 165.4 mm, the number of turbulence-generating projections 310 is 90, and the pitch angle 3θp is 4 degrees. In a case in which the radius of curvature Rd is 165.5 mm to 176.5 mm, the number of turbulence-generating projections 310 is 96, and the pitch angle 3θp is 3.8 degrees. In a case in which the radius of curvature Rd is 176.6 mm to 183.8 mm, the number of turbulence-generating projections 310 is 100, and the pitch angle 3θp is 3.6 degrees. In a case in which the radius of curvature Rd is 183.9 mm to 220.6 mm, the number of turbulence-generating projections 310 is 120, and the pitch angle 3θp is 3 degrees. In a case in which the radius of curvature Rd is 220.7 mm to 229.8 mm, the number of turbulence-generating projections 310 is 125, and the pitch angle 3θp is 2.9 degrees. In a case in which the radius of curvature Rd is 229.9 mm to 264.7 mm, the number of turbulence-generating projections 310 is 144, and the pitch angle 3θp is 2.5 degrees. In a case in which the radius of curvature Rd is 264.8 mm to 275.7 mm, the number of turbulence-generating projections 310 is 150, and the pitch angle 3θp is 2.4 degrees. In a case in which the radius of curvature Rd is 275.8 mm to 294.1 mm, the number of turbulence-generating projections 310 is 160, and the pitch angle 3θp is 2.3 degrees. In a case in which the radius of curvature Rd is 294.2 mm to 330.9 mm, the number of turbulence-generating projections 310 is 180, and the pitch angle 3θp is 2 degrees. In a case in which the radius of curvature Rd is 331.0 mm to 352.9 mm, the number of turbulence-generating projections 310 is 192, and the pitch angle 3θp is 1.9 degrees. In a case in which the radius of curvature Rd is 353.0 mm to 367.6 mm, the number of turbulence-generating projections 310 is 200, and the pitch angle 3θp is 1.8 degrees.

The pitch angle 3θp is the angle between one turbulence-generating projection 310 and another turbulence-generating projection 310 adjacent to the one turbulence-generating projection 310, with the rotation axis of the tire as the center. Specifically, the pitch angle 3θp is the angle formed between lines extending from the rotation axis of the tire through points bisecting the length 310L on the lines m of adjacent turbulence-generating projections 310.

The angle 3θa between a line parallel to the tire radial direction and the line m is preferably in a range of 10° to 45°. In the present embodiment, the angle 3θa between the line parallel to the tire radial direction and the line m is, for example, 27°.

As illustrated in FIG. 20B, in a cross-section orthogonal to the extending direction of the turbulence-generating projection 310, the turbulence-generating projection 310 and the tire outer surface 3A of the tire side portion 1d are preferably connected in the shape of an arc. In the present embodiment, the radius of curvature Re of the arc is, for example, 0.4 mm. The angle 3θb between the side surface of the turbulence-generating projection 310 facing the tire circumferential direction and a line parallel to the tire width direction is preferably in a range of 3° to 15°. In the present embodiment, the angle 3θb is 10°.

As illustrated in FIG. 21B, the height 310H of the tire side portion 1d from the tire outer surface 3A is preferably in a range of 0.5 mm to 1.5 mm. The cooling effect is enhanced by the height 310H being 0.5 mm or more. By the height 310H being 1.5 mm or less, the depth to the bottom of the recess in the tire mold for forming the turbulence-generating projections 310 is not deep. Rubber material can thereby easily enter to the bottom of the recess in the tire mold for forming the turbulence-generating projections 310. Therefore, the occurrence of bare portions in the turbulence-generating projections 310 can be suppressed. In the present embodiment, the height 310H is, for example, constant at 0.7 mm.

The height 315H of the circumferential projection 315 from the tire outer surface 3A is preferably in a range of 0.5 mm to 1.5 mm. By the height 315H being 0.5 mm or more, air accumulated in the recess in the tire mold for forming the circumferential projection 315 is less likely to move into the recess in the tire mold for forming the projection outer end 311. Therefore, the occurrence of bare portions in the turbulence-generating projections 310 can be suppressed. By the height 315H being 1.5 mm or less, the length to the bottom of the recess in the tire mold for forming the circumferential projection 315 is shortened. Rubber material can thereby easily enter to the bottom of the recess in the tire mold for forming the projection outer end 311. Therefore, the occurrence of bare portions in the circumferential projection 315 can be suppressed. In the present embodiment, the height 315H is, for example, 0.9 mm. As described above, the height 315H is higher than the height 310H in the present embodiment.

In the present embodiment, the width of the circumferential projection 315 in the tire radial direction varies along the tire width direction. Specifically, the width of the circumferential projection 315 becomes narrower farther outward in the tire width direction. Accordingly, the width 315La, in the tire radial direction, of the upper surface 315a (the surface facing the tire radial direction) of the circumferential projection 315 is narrower than the width 315Lb, in the tire radial direction, of the circumferential projection 315 on the tire outer surface 1ds of the tire side portion 1d. In other words, the shape of the circumferential projection 315 is trapezoidal in a cross-section along the tire radial direction and the tire width direction. The width 315La and the width 315Lb preferably satisfy the expressions 0.2 mm ≤ width 315La ≤ 3 mm, and 1.5 mm ≤ width 315Lb ≤ 5.0 mm. By the width 315La being 0.2 mm or more and the width 315Lb being 1.5 mm or more, the rubber material configuring the circumferential projection 315 can easily enter the recess in the tire mold for forming the circumferential projection 315. Consequently, the occurrence of bare portions in the circumferential projection 315 can be suppressed. Setting the width 315La to 3 mm or less and the width 315Lb to 5.0 mm or less enables a reduction in the amount of rubber material used and a reduction in weight of the tire side portion 1d.

The width of the circumferential projection 315 in the tire radial direction is narrower than the maximum width of the turbulence-generating projection 310 in the tire circumferential direction. In the present embodiment, the maximum width of the turbulence-generating projection 310 in the tire circumferential direction is the width of the projection outer end 311 in the tire circumferential direction. In other words, this is the projection width 311W of the projection outer end 311 of the turbulence-generating projection 310. Specifically, the maximum width of the turbulence-generating projection 310 in the tire circumferential direction is the length, in the tire circumferential direction, from one width end 311A to the other width end 311B. In the present embodiment, the width 315La of the circumferential projection 315 is narrower than the width of the projection outer end 311 in the tire circumferential direction. Specifically, the width of the projection outer end 311 in the tire circumferential direction is, for example, 5 mm. The width 315La of the circumferential projection 315 is, for example, 3.0 mm. The width 315Lb of the circumferential projection 315 is narrower than the width of the projection outer end 311 in the tire circumferential direction.

According to the tire 1 of the seventh embodiment, the projection outer end 311 is connected to the circumferential projection 315. In other words, in the tire radial direction, the circumferential projection 315 is located on the outer side of the projection outer end 311. Furthermore, the height 311H of the projection outer end 311 relative to the tire outer surface 3A of the tire side portion 1d is lower than the height 315H of the circumferential projection 315 relative to the tire outer surface 3A of the tire side portion 1d at a portion at which the projection outer end 311 of the turbulence-generating projection 310 and the circumferential projection 315 are connected in the tire radial direction.

When a raw tire is vulcanized in a tire mold, air that tends to accumulate in the corners of the recess in the tire mold for forming the projection outer end 311 moves to the recess in the tire mold for forming the circumferential projection 315. Therefore, rubber material can reach the bottom of the recess of the tire mold for forming the projection outer end 311 of the turbulence-generating projection 310 without being obstructed by air, thereby suppressing the formation of a bare portion at the projection outer end 311.

Since the height 311H of the projection outer end 311 relative to the tire outer surface 3A of the tire side portion 1d is lower than the height 315H of the circumferential projection 315 relative to the tire outer surface 3A of the tire side portion 1d at a portion at which the projection outer end 311 and the circumferential projection 315 are connected, a step with a different heights along the tire width direction is formed between the bottom of the recess for forming the circumferential projection 315 and the bottom of the recess for forming the projection outer end 311. Accordingly, when a raw tire is vulcanized in a mold for forming a tire, air accumulated in the recess for forming the circumferential projection 315 must cross the step in order to move to the recess for forming the projection outer end 311. The air accumulated in the recess for forming the circumferential projection 315 is pushed to the bottom of the recess for forming the circumferential projection 315 by the rubber material that enters the recess. Therefore, air accumulated in the recess for forming the circumferential projection 315 is less likely to cross the step and move into the recess forming the turbulence-generating projection 310.

Furthermore, since the height 311H of the projection outer end 311 is lower than the height 315H of the circumferential projection 315, the rubber material can easily reach the bottom of the recess for forming the projection outer end 311.

As a result of these effects, air is less likely to accumulate in the corners of the recesses of the tire mold for forming the projection outer end 311, and rubber material can more easily move to enter the recesses of the tire mold for forming the projection outer end 311. Therefore, the occurrence of bare portions in the projection outer end 311 can be suppressed.

The temperature of the tire side portion 1d can be reduced by the turbulence-generating projections 310, since the turbulence-generating projections 310 are provided on the tire side portion 1d. Furthermore, the circumferential projection 315 is provided on the tire side portion 1d. Therefore, air having a radial component in the tire radial direction overcomes the circumferential projection 315. The air that comes over then flows in a direction substantially perpendicular to the tire outer surface 3C on the back side of the circumferential projection 315 and strikes the tire outer surface 3C located on the tire radial outer side of the circumferential projection 315. Therefore, the air flow striking the tire outer surface 3C exchanges heat with the air flow resting on the tire outer surface 3C located on the tire radial outer side of the circumferential projection 315. As a result of these effects, a rise in temperature of the tire outer surface 1ds of the tire side portion 1d can be suppressed, and the tire durability can be improved.

According to the tire 1 of the present embodiment, in the tire maximum width region TR, the projection outer end 311 is connected to the circumferential projection 315, and the width of the circumferential projection 315 in the tire radial direction is narrower than the maximum width of the turbulence-generating projection 310 in the tire circumferential direction.

In a cross-section along the tire radial direction and the tire width direction, the tire outer surface 1ds of the tire side portion 1d has a curved shape. Air flow having a radial component going outward in the tire radial direction thus easily separates from the tire outer surface 1ds of the tire 1 near the tire maximum width region TR. In the tire maximum width region TR, however, the projection outer end 311 is connected to the circumferential projection 315. Hence, when air flow with a radial component overcomes the circumferential projection 315, the air flows in the vertical direction relative to the outer surface 3C of the tire 1 (so-called downflow) at the outer side of the circumferential projection 315 in the tire radial direction. This suppresses the air flow that has a radial component from separating from the tire outer surface 3C of the tire, controls the rise in temperature of the tire outer surface 3C of the tire 1 on the outer side of the circumferential projection 315 in the tire radial direction, and improves the tire durability.

Furthermore, since the width of circumferential projection 315 in the tire radial direction is narrower than the maximum width of the turbulence-generating projection 310 in the tire circumferential direction, the amount of rubber material used to configured the tire side portion 1d does not significantly increase. Therefore, the gauge of the tire side portion 1d can be made thinner, while the occurrence of bare portions in the projection outer end 311 is suppressed.

According to the tire 1 of the seventh embodiment, the turbulence-generating projection 310 extends at an inclination relative to the tire radial direction. Since the turbulence-generating projection 310 extends at an inclination relative to the tire radial direction, the generation of turbulence is promoted by the relationship between air flowing outward due to centrifugal force and stagnant air, thereby enhancing the cooling effect, as described in WO2009/017167.

### INDUSTRIAL APPLICABILITY

A tire according to the present invention can be suitably used as any type of pneumatic tire, such as a passenger vehicle pneumatic tire and a truck/bus pneumatic tire.

### REFERENCE SIGNS LIST

- 1: Tire
- 1M: Tire main body
- 1a: Tread portion
- 1b: Sidewall portion
- 1c: Bead portion
- 1d: Tire side portion
- 1ds: Tire outer surface of tire side portion
- 3: Reinforcement member
- 3a: Reinforcement ply
- 3u: Tire radial outer end of reinforcement member
- 4a: Bead core
- 4b: Bead filler
- 4b1, 4b2: Bead filler portion
- 4bu: Tire radial outer end of bead filler
- 5: Carcass
- 5a: Carcass ply
- 5M: Ply main body
- 5T: Ply turn-up portion
- 5e: Tire radial outer end of ply turn-up portion of carcass
- 6: Belt
- 6a: Belt layer
- 7: Tread rubber
- 8: Side rubber
- 9: Inner liner
- 10: Communication device
- 10e: RF tag
- 10b: Antenna unit
- 10b1, 10b2: Antenna
- 10f: Cover
- 10f1, 10f2: Covering member
- 10c: IC chip
- 10u: Tire radial outer end of communication device
- 10m: Tire radial center of communication device
- F: Turbulence-generating projection
- G: Inter-projection recess
- CL: Tire equatorial plane
- WD: Tire width direction
- RD: Tire radial direction
- CD: Tire circumferential direction
- LD: Longitudinal direction of communication device
- SD: Transverse direction of communication device
- TD: Thickness direction of communication device

## Claims

1. A tire (1) comprising:
a plurality of turbulence-generating projections (F) projecting from a tire outer surface (1ds) of the tire side portion (1d), extending along a tire radial direction, and arranged at intervals in a tire circumferential direction, the tire (1) being **characterized in** further comprising:
a communication device (10) embedded inside a tire side portion (1d); wherein
the communication device (10) overlaps at least one of an inter-projection recess (G) between adjacent turbulence-generating projections (F) and the turbulence-generating projection (F) in a projected plane of the tire side portion in a tire width direction, and
the communication device (10) is entirely located within the inter-projection recess (G) in the projected plane of the tire side portion (1d) in the tire width direction.

2. The tire (1) according to claim 1, wherein a plurality of uneven surfaces (24) extending along the tire radial direction while undulating in the tire width direction is formed at an apex (23) of the turbulence-generating projection (F, 20).

3. The tire (1) according to claim 1, wherein
the tire side portion (1d) includes
a first rigidity portion (61), in which a first rubber member formed by a rubber member and having a predetermined rigidity is used, and
a second rigidity portion (62) in which a second rubber member having a rigidity higher than the predetermined rigidity is used, and
the turbulence-generating projections (F) are only provided in the first rigidity portion.

4. The tire (1) according to claim 1, wherein
a projection width, defined as a length of the turbulence-generating projection (F) in the tire circumferential direction, varies in the tire radial direction and widens toward a projection outer end located on a tire radial outer side, and
a height of the turbulence-generating projection (F) relative to the tire outer surface (1ds) of the tire side portion (1d) varies in the tire radial direction and is formed to decrease gradually toward the projection outer end.

5. The tire (1) according to claim 1, wherein
the tire side portion (1d) has provided thereon
a first region (2R1) in which a plurality of the turbulence-generating projections (F, 210) are arranged adjacent to each other, and
a second region (2R2) at least partially overlapping the first region in the tire circumferential direction and not having any turbulence-generating projections arranged therein,
a protrusion (220) projecting from the tire outer surface (1ds) of the tire side portion (1d) is formed in the second region (2R2),
the protrusion (220) has a shape of characters and symbols displaying information or a shape of figures and patterns displaying a design, and
the protrusion (220) has a height from the tire outer surface (1ds) of the tire side portion (1d) that is from 50% to 100% of a height of the turbulence-generating projection (F, 210) from the tire outer surface (1ds) of the tire side portion (1d).

6. The tire (1) according to claim 1, further comprising
a circumferential projection (315) projecting from the tire outer surface (1ds) of the tire side portion (1d) and extending in the tire circumferential direction, wherein
an end of the turbulence-generating projection (F, 310) in the tire radial direction is connected to the circumferential projection (315), and
a height of the end of the turbulence-generating projection (F, 310) relative to the tire outer surface (1ds) of the tire side portion (1d) is lower than a height of the circumferential projection (315) relative to the tire outer surface (1ds) of the tire side portion (1d) at a portion at which the end of the turbulence-generating projection (F, 310) and the circumferential projection (315) are connected in the tire radial direction.

7. The tire (1) according to claim 1, wherein
in the tire side portion (1d), the tire has a tire maximum width region (TR) that includes a position at which a length of the tire in the tire width direction is maximized,
an end of the turbulence-generating projection (F, 310) in the tire radial direction is located in the tire maximum width region (TR),
the tire (1) comprises a circumferential projection (315) projecting from the tire outer surface (1ds) of the tire side portion (1d) and extending in the tire circumferential direction,
the end of the turbulence-generating projection (F, 310) is connected to the circumferential projection (315), and
a width of the circumferential projection (315) in the tire radial direction is narrower than a maximum width of the turbulence-generating projection (F, 310) in the tire circumferential direction.

8. The tire (1) according to any one of claims 1 to 7, wherein the turbulence-generating projection (F) has a maximum width of 4.7 mm to 7.1 mm in the tire circumferential direction.

9. The tire (1) according to any one of claims 1 to 8, wherein the turbulence-generating projection (F) has a length of 8 mm to 30 mm in the tire radial direction.

10. The tire (1) according to any one of claims 1 to 9, wherein the communication device (10) is an RF tag.

## Patentansprüche

1. Reifen (1), umfassend:
eine Vielzahl von turbulenzerzeugenden Vorsprüngen (F), die von einer Reifenaußenfläche (1ds) des Reifenseitenabschnitts (1d) vorstehen, sich entlang einer Reifenradialrichtung erstrecken und in Abständen in einer Reifenumfangsrichtung angeordnet sind, wobei der Reifen (1) weiter **dadurch gekennzeichnet ist, dass** er umfasst:
eine Kommunikationsvorrichtung (10), die in einen Reifenseitenabschnitt (1d) eingebettet ist; wobei
die Kommunikationsvorrichtung (10) mindestens eines von einer Zwischenvorsprungsaussparung (G) zwischen benachbarten turbulenzerzeugenden Vorsprüngen (F) und dem turbulenzerzeugenden Vorsprung (F) in einer projizierten Ebene des Reifenseitenabschnitts in einer Reifenbreitenrichtung überlappt, und
die Kommunikationsvorrichtung (10) vollständig innerhalb der Zwischenvorsprungsaussparung (G) in der projizierten Ebene des Reifenseitenabschnitts (1d) in der Reifenbreitenrichtung angeordnet ist.

2. Reifen (1) nach Anspruch 1, wobei an einem Scheitelpunkt (23) des turbulenzerzeugenden Vorsprungs (F, 20) eine Vielzahl unebener Oberflächen (24) ausgebildet ist, die sich entlang der Reifenradialrichtung erstrecken und in der Reifenbreitenrichtung wellenförmig verlaufen.

3. Reifen (1) nach Anspruch 1, wobei
der Reifenseitenabschnitt (1d) Folgendes einschließt
einen ersten Steifigkeitsabschnitt (61), in dem ein erstes Gummielement verwendet wird, das aus einem Gummielement besteht und eine vorgegebene Steifigkeit aufweist, und
einen zweiten Steifigkeitsabschnitt (62), in dem ein zweites Gummielement verwendet wird, das eine Steifigkeit aufweist, die höher ist als die vorgegebene Steifigkeit, und
die turbulenzerzeugenden Vorsprünge (F) nur im ersten Steifigkeitsabschnitt bereitgestellt sind.

4. Reifen (1) nach Anspruch 1, wobei
eine Vorsprungsbreite, definiert als eine Länge des turbulenzerzeugenden Vorsprungs (F) in der Reifenumfangsrichtung, in der Reifenradialrichtung variiert und sich in Richtung eines äußeren Vorsprungsendes erweitert, das sich auf einer radialen Außenseite des Reifens befindet, und
eine Höhe des turbulenzerzeugenden Vorsprungs (F) relativ zur Reifenaußenfläche (1ds) des Reifenseitenabschnitts (1d) in der Reifenradialrichtung variiert und so geformt ist, dass sie in Richtung des äußeren Vorsprungsendes allmählich abnimmt.

5. Reifen (1) nach Anspruch 1, wobei
auf dem Reifenseitenabschnitt (1d) Folgendes bereitgestellt ist
ein erster Bereich (2R1), in dem eine Vielzahl der turbulenzerzeugenden Vorsprünge (F, 210) nebeneinander angeordnet sind, und
ein zweiter Bereich (2R2), der den ersten Bereich in der Reifenumfangsrichtung zumindest teilweise überlappt und in dem keine turbulenzerzeugenden Vorsprünge angeordnet sind,
ein Vorsprung, (220), der von der Reifenaußenfläche (1ds) des Reifenseitenabschnitts (1d) vorsteht, im zweiten Bereich (2R2) ausgebildet ist,
der Vorsprung (220) eine Form von Buchstaben und Symbolen, die Informationen anzeigen, oder eine Form von Figuren und Mustern, die ein Design anzeigen, aufweist, und
der Vorsprung (220) eine Höhe von der Reifenaußenfläche (1ds) des Reifenseitenabschnitts (1d) aufweist, die 50 % bis 100 % einer Höhe des turbulenzerzeugenden Vorsprungs (F, 210) von der Reifenaußenfläche (1ds) des Reifenseitenabschnitts (1d) beträgt.

6. Reifen (1) nach Anspruch 1, weiter umfassend
einen Umfangsvorsprung (315), der von der Reifenaußenfläche (1ds) des Reifenseitenabschnitts (1d) vorsteht und sich in der Reifenumfangsrichtung erstreckt, wobei
ein Ende des turbulenzerzeugenden Vorsprungs (F, 310) in der Reifenradialrichtung mit dem Umfangsvorsprung (315) verbunden ist, und
eine Höhe des Endes des turbulenzerzeugenden Vorsprungs (F, 310) an einem Abschnitt, an dem das Ende des turbulenzerzeugenden Vorsprungs (F, 310) und der Umfangsvorsprung (315) in der Reifenradialrichtung verbunden sind, relativ zur Reifenaußenfläche (1ds) des Reifenseitenabschnitts (1d) niedriger ist als eine Höhe des Umfangsvorsprungs (315) relativ zur Reifenaußenfläche (1ds) des Reifenseitenabschnitts (1d).

7. Reifen (1) nach Anspruch 1, wobei
im Reifenseitenabschnitt (1d) der Reifen einen Bereich maximaler Reifenbreite (TR) aufweist, der eine Position einschließt, an der eine Länge des Reifens in der Reifenbreitenrichtung maximal ist,
ein Ende des turbulenzerzeugenden Vorsprungs (F, 310) in der Reifenradialrichtung im Bereich der maximalen Reifenbreite (TR) liegt,
der Reifen (1) einen Umfangsvorsprung (315) umfasst, der von der Reifenaußenfläche (1ds) des Reifenseitenabschnitts (1d) vorsteht und sich in der Reifenumfangsrichtung erstreckt,
das Ende des turbulenzerzeugenden Vorsprungs (F, 310) mit dem Umfangsvorsprung (315) verbunden ist, und
eine Breite des Umfangsvorsprungs (315) in Reifenradialrichtung schmaler ist als eine maximale Breite des turbulenzerzeugenden Vorsprungs (F, 310) in der Reifenumfangsrichtung.

8. Reifen (1) nach einem der Ansprüche 1 bis 7, wobei der turbulenzerzeugende Vorsprung (F) in der Reifenumfangsrichtung eine maximale Breite von 4,7 mm bis 7,1 mm aufweist.

9. Reifen (1) nach einem der Ansprüche 1 bis 8, wobei der turbulenzerzeugende Vorsprung (F) in der Reifenradialrichtung eine Länge von 8 mm bis 30 mm aufweist.

10. Reifen (1) nach einem der Ansprüche 1 bis 9, wobei die Kommunikationsvorrichtung (10) ein RF-Tag ist.

## Revendications

1. Pneu (1) comprenant :
une pluralité de saillies de génération de turbulences (F) faisant saillie depuis la surface externe de pneu (1ds) de la partie latérale de pneu (1d), s'étendant le long d'une direction radiale de pneu et agencées à intervalles dans une direction circonférentielle de pneu, le pneu (1) étant **caractérisé en ce qu'**il comprend en outre :
un dispositif de communication (10) intégré à l'intérieur d'une partie latérale de pneu (1d) ; dans lequel
le dispositif de communication (10) chevauche au moins un d'un évidement entre saillies (G) entre des saillies de génération de turbulences adjacentes (F) et la saillie de génération de turbulences (F) dans un plan en saillie de la partie latérale de pneu dans une direction de largeur de pneu, et
le dispositif de communication (10) est entièrement situé à l'intérieur de l'évidement entre saillies (G) dans le plan en saillie de la partie latérale de pneu (1d) dans la direction de largeur de pneu.

2. Pneu (1) selon la revendication 1, dans lequel une pluralité de surfaces irrégulières (24) s'étendant le long de la direction radiale de pneu tout en ondulant dans la direction de largeur de pneu sont formées à un sommet (23) de la saillie de génération de turbulences (F, 20).

3. Pneu (1) selon la revendication 1, dans lequel
la partie latérale de pneu (1d) inclut
une première partie de rigidité (61), dans laquelle un premier élément en caoutchouc formé par un élément en caoutchouc et présentant une rigidité prédéterminée est utilisé, et
une seconde partie de rigidité (62) dans laquelle un second élément en caoutchouc présentant une rigidité supérieure à la rigidité prédéterminée est utilisé, et
les saillies de génération de turbulences (F) ne sont prévues que dans la première partie de rigidité.

4. Pneu (1) selon la revendication 1, dans lequel
une largeur de saillie, définie comme une longueur de la saillie de génération de turbulences (F) dans la direction circonférentielle de pneu, varie dans la direction radiale de pneu et s'élargit vers une extrémité externe de saillie située sur un côté externe radial de pneu, et
une hauteur de la saillie de génération de turbulences (F) par rapport à la surface externe de pneu (1ds) de la partie latérale de pneu (1d) varie dans la direction radiale de pneu et est formée pour diminuer progressivement vers l'extrémité externe de saillie.

5. Pneu (1) selon la revendication 1, dans lequel
la partie latérale de pneu (1d) présente
une première région (2R1) dans laquelle une pluralité de saillies de génération de turbulences (F, 210) sont agencées adjacentes les unes aux autres, et
une seconde région (2R2) chevauchant au moins partiellement la première région dans la direction circonférentielle de pneu et ne présentant aucune saillie de génération de turbulences agencée à l'intérieur,
une saillie (220) faisant saillie à partir de la surface externe de pneu (1ds) de la partie latérale de pneu (1d) est formée dans la seconde région (2R2),
la saillie (220) présente une forme de caractères et de symboles affichant des informations ou une forme de figures et de motifs affichant un dessin, et
la saillie (220) présente une hauteur à partir de la surface externe de pneu (1ds) de la partie latérale de pneu (1d) qui est de 50 % à 100 % d'une hauteur de la saillie de génération de turbulences (F, 210) à partir de la surface externe de pneu (1ds) de la partie latérale de pneu (1d).

6. Pneu (1) selon la revendication 1, comprenant en outre
une saillie circonférentielle (315) faisant saillie à partir de la surface externe de pneu (1ds) de la partie latérale de pneu (1d) et s'étendant dans la direction circonférentielle de pneu, dans lequel
une extrémité de la saillie de génération de turbulences (F, 310) dans la direction radiale de pneu est reliée à la saillie circonférentielle (315), et
une hauteur de l'extrémité de la saillie de génération de turbulences (F, 310) par rapport à la surface externe de pneu (1ds) de la partie latérale de pneu (1d) est inférieure à une hauteur de la saillie circonférentielle (315) par rapport à la surface externe de pneu (1ds) de la partie latérale de pneu (1d) au niveau d'une partie au niveau de laquelle l'extrémité de la saillie de génération de turbulences (F, 310) et la saillie circonférentielle (315) sont reliées dans la direction radiale de pneu.

7. Pneu (1) selon la revendication 1, dans lequel
dans la partie latérale de pneu (1d), le pneu présente une région de largeur maximale de pneu (TR) qui inclut une position à laquelle une longueur du pneu dans la direction de largeur de pneu est maximisée,
une extrémité de la saillie de génération de turbulences (F, 310) dans la direction radiale de pneu est située dans la région de largeur maximale de pneu (TR),
le pneu (1) comprend une saillie circonférentielle (315) faisant saillie à partir de la surface externe de pneu (1ds) de la partie latérale de pneu (1d) et s'étendant dans la direction circonférentielle de pneu,
l'extrémité de la saillie de génération de turbulences (F, 310) est reliée à la saillie circonférentielle (315), et
une largeur de la saillie circonférentielle (315) dans la direction radiale de pneu est plus étroite qu'une largeur maximale de la saillie de génération de turbulences (F, 310) dans la direction circonférentielle de pneu.

8. Pneu (1) selon l'une quelconque des revendications 1 à 7, dans lequel la saillie de génération de turbulences (F) présente une largeur maximale de 4,7 mm à 7,1 mm dans la direction circonférentielle de pneu.

9. Pneu (1) selon l'une quelconque des revendications 1 à 8, dans lequel la saillie de génération de turbulences (F) présente une longueur de 8 mm à 30 mm dans la direction radiale de pneu.

10. Pneu (1) selon l'une quelconque des revendications 1 à 9, dans lequel le dispositif de communication (10) est une étiquette RF.
